(19) Europäisches Patentamt
European Patent Office
Office européen des brevets

(11) **EP 4 109 143 A1**

(12) **EUROPEAN PATENT APPLICATION**
published in accordance with Art. 153(4) EPC

(43) Date of publication:
**28.12.2022 Bulletin 2022/52**

(21) Application number: **21776768.0**

(22) Date of filing: **23.03.2021**

(51) International Patent Classification (IPC):
*G02B 5/00* (2006.01)    *B32B 7/023* (2019.01)
*G02B 1/115* (2015.01)    *G02B 5/22* (2006.01)

(52) Cooperative Patent Classification (CPC):
**B32B 7/023; G02B 1/115; G02B 5/00; G02B 5/22**

(86) International application number:
**PCT/JP2021/012034**

(87) International publication number:
**WO 2021/193652 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2020 JP 2020056401**

(71) Applicant: **Tokai Optical Co., Ltd.
Okazaki-shi, Aichi 444-2192 (JP)**

(72) Inventors:
• **YOSHIDA Takuro
Aza-shimoda, Eta-cho, Okazaki-shi, Aichi 444-2192 (JP)**
• **TORII Shunsuke
Aza-shimoda, Eta-cho, Okazaki-shi, Aichi 444-2192 (JP)**

(74) Representative: **Prüfer & Partner mbB
Patentanwälte · Rechtsanwälte
Sohnckestraße 12
81479 München (DE)**

(54) **LIGHT-SHIELDING MEMBER**

(57)    [PROBLEM] Provided is a light-shielding member having excellent blackness.

[SOLUTION] An optical multilayer film 4 of a light-shielding member 1 includes light absorbing layers that absorb visible light 6 and dielectric layers 8 that are made of a dielectric such that a total number of the layers is 4 or more. An outermost layer 10 most distant from a base 2 has a physical film thickness not less than 62 nm and not greater than 91 nm. A surface-side light absorption thickness C which is a total of physical film thicknesses of the light absorbing layers 6 disposed between the outermost layer 10 and a next outermost layer 12, which is closest to the outermost layer 10 among the dielectric layers 8 having a physical film thickness not less than 26 nm and not greater than 85 nm, is not less than 6 nm and not greater than 17 nm. A base-side light absorption thickness D which is a total of physical film thicknesses of the light absorbing layers 6 disposed between the next outermost layer 12 and the base 2 is not less than 60 nm. A specific proportion F=(C+D)/E, regarding a specific surface layer thickness E which is a total of the physical film thicknesses of layers from a base-side maximum-thickness light absorbing layer 18, which has a maximum physical film thickness among the light absorbing layers 6 disposed between the next outermost layer 12 and the base 2, to the outermost layer 10, is not less than 0.34.

FIG.1

**Description**

TECHNICAL FIELD

The present invention relates to a light-shielding member that is a member having light shielding performance.

BACKGROUND ART

A light-shielding member disclosed in JP 6541244 B (Patent Literature 1) has been known.

In this light-shielding member, a surface, of a base member, having fine irregularities caused by matting is colored with a colorant such as carbon black.

In this light-shielding member, however, reduction in reflectance is not sufficient because of reflection of light at the surfaces of particles of the colorant, resulting in an appearance that is basically black but is whitish (like a white haze over a black surface), i.e., an appearance of gray as a whole. Therefore, there is room for improvement in terms of blackness.

Meanwhile, JP 6036363 B (Patent Literature 2) has proposed a light-shielding film in which an Ni-based metal film (nickel film) and an Ni-based metal oxide film are sequentially sputtered on the surface of a film base to form a multilayer film.

In this light-shielding film, since no colorant is disposed on the surface of the film base, there is no reflection of light by a colorant.

CITATION LIST

[PATENT LITERATURE]

[PTL 1] Japanese Patent No. 6541244
[PTL 2] Japanese Patent No. 6036363

SUMMARY OF THE INVENTION

PROBLEMS TO BE SOLVED BY THE INVENTION

However, in the light-shielding film on which the Ni-based metal film and the like are sputtered, since the Ni-based metal oxide film, which is an outermost layer most distant from the film base, has a high refractive index of 2 or more, the reflectance at an interface of the outermost layer is increased, which eventually causes reflection of light to some extent. Moreover, in this light-shielding film, the multilayer film as a whole is not configured to sufficiently reduce the reflectance. Therefore, the reflectance is not sufficiently reduced, which results in an appearance that is basically black but is whitish, i.e., an appearance of gray as a whole. Therefore, there is still room for improvement in terms of blackness.

Therefore, a main object of the present invention is to provide a light-shielding member having excellent blackness.

SOLUTION TO THE PROBLEMS

The invention according to claim 1 is a light-shielding member including a base, and an optical multilayer film disposed on a film deposition surface which is one or more surfaces of the base. The optical multilayer film includes light absorbing layers that absorb visible light and dielectric layers that are made of a dielectric such that a total number of the layers is 4 or more. An outermost layer most distant from the base is the dielectric layer. The outermost layer has a physical film thickness not less than 62 nm and not greater than 91 nm. A surface-side light absorption thickness which is a total of the physical film thicknesses of one or more of the light absorbing layers disposed between the outermost layer and a next outermost layer is not less than 6 nm and not greater than 17 nm. The next outermost layer is the dielectric layer having a physical film thickness not less than 26 nm and not greater than 85 nm and is closest to the outermost layer. A base-side light absorption thickness which is a total of the physical film thicknesses of one or more of the light absorbing layers disposed between the next outermost layer and the base is not less than 60 nm. In a case where a specific surface layer thickness which is a total of the physical film thicknesses of layers from a base-side maximum thickness light absorbing layer, which has a maximum physical film thickness among the light absorbing layers disposed between the next outermost layer and the base, to the outermost layer is a divisor, and a sum of the surface-side light absorption thickness and the base-side light absorption thickness is a dividend, a specific proportion obtained as a quotient is not less than 0.34.

In the invention according to claim 2 based on the above invention, a total physical film thickness of the optical multilayer film is not greater than 400 nm.

In the invention according to claim 3 based on the above invention, the film deposition surface has irregularities, and the film deposition surface has a surface roughness not greater than 1.0 $\mu$m.

In the invention according to claim 4 based on the above invention, the base is colored in black.

In the invention according to claim 5 based on the above invention, the light absorbing layer contains a metal or an unsaturated oxide of a metal.

In the invention according to claim 6 based on the above invention, a main component of the light absorbing layer is at least one of Nb, Ti, Ni, Ge, Al, Si, Cr, and an unsaturated oxide of any of these metals.

In the invention according to claim 7 based on the above invention, the dielectric layer contains a metal compound.

In the invention according to claim 8 based on the above invention, a main component of the dielectric layer is at least one of $SiO_2$ $MgF_2$, $Nb_2O_5$, $TiO_2$, $Al_2O_3$, $ZrO_2$, $Ta_2O_5$, $Si_3N_4$, and $SiN_yO_z$.

In the invention according to claim 9 based on the above invention, the main component of the outermost layer is at least one of $SiO_2$ and $MgF_2$.

The invention according to claim 10 is a light-shielding member including a base, and an optical multilayer film disposed on a film deposition surface which is one or more surfaces of the base. The film deposition surface has irregularities. An average optical density of the film deposition surface in a wavelength range of not less than 380 nm and not greater than 780 nm with respect to light whose incident angle is not less than 0° and not greater than 8°, is not less than 4.0. An average regular reflectance of the film deposition surface in a wavelength range of not less than 380 nm and not greater than 780 nm with respect to light whose incident angle is not less than 0° and not greater than 8°, is not greater than 0.02%. A lightness L* of the film deposition surface in L*a*b* colorimetric system measurement (JISZ8729) is not greater than 4.5.

The invention according to claim 11 is a light-shielding member including a transparent base, and an optical multilayer film disposed on a film deposition surface which is one or more surfaces of the base. The film deposition surface is a mirror-finished surface. An average regular reflectance of the film deposition surface in a wavelength range of not less than 400 nm and not greater than 700 nm with respect to light whose incident angle is not less than 0° and not greater than 8°, is not greater than 0.450%. An average regular reflectance of the film deposition surface in a wavelength range of not less than 380 nm and not greater than 780 nm with respect to light whose incident angle is not less than 0° and not greater than 8°, is not greater than 0.660%. An average optical density of the film deposition surface in a wavelength range of not less than 380 nm and not greater than 780 nm with respect to light whose incident angle is not less than 0° and not greater than 8°, is not less than 2.1.

ADVANTAGEOUS EFFECTS OF THE INVENTION

A main effect of the present invention is to provide a light-shielding member having excellent blackness.

BRIEF DESCRIPTION OF THE DRAWINGS

[FIG. 1] FIG. 1 is a transverse cross-sectional view schematically illustrating a light-shielding member according to the present invention.
[FIG. 2] FIG. 2 schematically illustrates warpage of a light-shielding member.

DESCRIPTION OF EMBODIMENTS

Hereinafter, an example of an embodiment according to the present invention will be described with reference to the drawings as appropriate.

The present invention is not limited to the embodiment below.

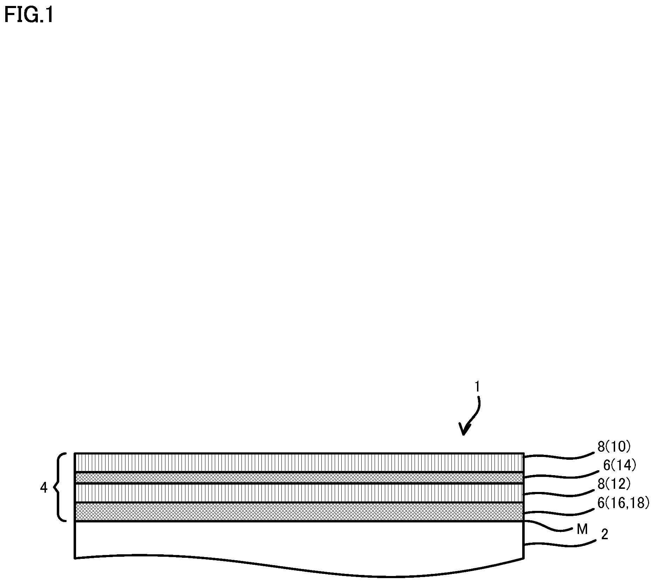

As illustrated in FIG. 1, a light-shielding member 1 according to the present invention includes a base 2 and an optical multilayer film 4.

The base 2 may have translucency (may be transparent or semi-transparent), or may not have translucency. From the viewpoint of ensuring blackness, the translucency of the base 2 is preferably low, and the base 2 is preferably colored in black.

The base 2 may have any shape. From the viewpoint of having a wide range of applications, the base 2 preferably has a plate shape, a sheet shape, or a member shape.

Examples of the material of the base 2 include polyethylene, polypropylene, ethylene-propylene copolymer, polyolefin, polyester such as polyethylene terephthalate (PET), polyamide, ethylene-vinyl acetate copolymer, polyvinyl chloride, polyvinyl acetate, acrylic resin, polycarbonate, polyimide, organic glass, inorganic glass, and combinations thereof.

The base 2 has a thickness not less than 10 $\mu$m (micrometers) and not greater than 200 $\mu$m. When the base 2 is colored in black, the base 2 is preferably thick from the viewpoint of ensuring blackness. The base 2 is preferably thin from the viewpoint of making the base 2 applicable to typical applications such as a diaphragm blade and a shutter blade, thereby expanding applications of the base 2.

The surface (one or both surfaces) of the base 2 may be a flat mirror-finished surface (mirror-finished base), or may have irregularities caused by matting or the like (uneven base). Matting is performed by at least one of matte treatment and application of a matting agent. A known matte treatment may be used. For example, blasting such as sand blasting, chemical etching, embossing, discharge such as plasma discharge, nanoimprinting, or the like may be used. Application of a matting agent is performed as follows. That is, for example, a matting agent, which is at least one of acryl-based particles, urethane-based particles, and silica-based particles each having an average particle size not smaller than 1 $\mu$m and not greater than 35 $\mu$m, is applied to the base 2 together with a binder to adhere the matting agent onto the base 2, thereby forming irregularities caused by the matting agent. Fine irregularities may be given to the surface of the base 2 by another method such as casting.

From the viewpoint of ensuring blackness by reducing apparent reflectance through irregular reflection by surface irregularities, it is preferable that the surface of the base 2 has irregularities (uneven base). When the surface of the base 2 has irregularities, the surface roughness (arithmetic average roughness) is preferably not greater than 1 $\mu$m from the viewpoint of ensuring excellent blackness.

When the base 2 is colored in black, the matting agent is colored in black by a colorant, for example. As a specific colorant, any of carbon black, carbon graphite, carbon nanotube, and titan black is adopted, for example. The base 2 is colored in black when the colored matting agent is applied to the surface thereof.

The base 2 may be windable (into a roll shape), or may be unwindable to an extent that it cannot be wound unless plastically deformed.

The optical multilayer film 4 is formed on the surface (one or both surfaces, film deposition surface M) of the base 2. When optical multilayer films 4 are formed on the both surfaces of the base 2, the structures of the optical multilayer films 4 at the respective surfaces may be different from each other. However, preferably, these structures are identical to each other. Alternatively, the optical multilayer film 4 of the present invention may be formed on one of the surfaces of the base 2, and an optical multilayer film or an optical single layer film not belonging to the present invention may be formed on the other surface.

The film deposition surface M of the base 2 may include a mirror-finished surface, or may include an uneven surface having irregularities.

The optical multilayer film 4 includes a plurality of light absorbing layers 6, and a plurality of dielectric layers 8.

From the viewpoint of ensuring performance and formation cost, the number of layers in the optical multilayer film 4 is preferably not less than 4. That is, from the viewpoint of ensuring performance, the number of layers in the optical multilayer film 4 has to be not less than 4. The larger the number of the layers is, the higher the degree of freedom in design is, and the easier the performance is ensured. A total physical film thickness of the optical multilayer film 4 is preferably not greater than 400 nm because, if it exceeds 400 nm, formation cost may be increased, and stress exceeding a predetermined degree may occur depending on the materials of the layers.

One or more other films, for example, at least one of a binder film that enhances adhesion and a hard coating film that increases hardness of the light-shielding member 1, may be inserted between the optical multilayer film 4 and the base 2. One or more other films, for example, at least one of an antifouling film and a protective film, may be added on the surface side (air side) of the optical multilayer film 4. These films may be handled as films included in the optical multilayer film 4.

Each light absorbing layer 6 absorbs visible light. Visible light is light having a wavelength range in a visible range. The visible range is, for example, not less than 400 nm (nanometers) and not greater than 780 nm. A lower limit of the visible range may be 380 nm, 390 nm, 410 nm, 420 nm, 430 nm, 440 nm, or the like. An upper limit of the visible range may be 800 nm, 790 nm, 770 nm, 760 nm, 750 nm, 730 nm, 700 nm, 680 nm, 650 nm, 640 nm, or the like.

The light absorbing layer 6 has a function of realizing a black appearance of the light-shielding member 1 by absorbing and shielding visible light.

The light absorbing layer 6 is preferably a layer made of a metal (including an unsaturated oxide of the metal). A main component of the light absorbing layer 6 is, for example, Nb (niobium), Ti (titanium), Ni (nickel), Ge (germanium), Al (aluminum), Si (silicon), Cr (chromium), or an unsaturated oxide of any of these metals. The light absorbing layer 6 may include at least two of these metals as main components. Here, the "main component" is a component whose weight ratio or volume ratio with respect to all components accounts for more than half. Hereinafter, a layer including Nb as a main component is referred to as an Nb layer, and layers including other main components may be similarly referred to. Characteristics of each layer depend on the main component. Even a layer, in which the amount of a component other than the main component is relatively large, has the same characteristics as a layer in which the amount of a component other than the main component is relatively small.

The unsaturated metal oxide is, for example, $NiO_x$ (x is greater than 0 and less than 1, unsaturated nickel oxide). An $NiO_x$ layer includes a compound of Ni and oxygen as a main component.

From the viewpoint of easiness in formation, the plurality of light absorbing layers 6 preferably include the same main component, and more preferably include the same components.

In order to achieve desired light shielding performance of the light-shielding member 1 as a whole, absorption of visible light by part of the plurality of light absorbing layers 6 may be in consideration of absorption of visible light by the other light absorbing layers 6. Absorption of visible light by the light absorbing layers 6 may be based on distribution of absorption, transmittance, or reflectance in the other layers or films in the optical multilayer film 4, or the base 2.

The light absorbing layer 6 is formed through vapor deposition, sputtering, or the like, and preferably is formed through sputtering.

When the light absorbing layer 6 is an $NiO_x$ layer to be formed through vapor deposition, the light absorbing layer 6 is preferably formed through ion assist deposition (IAD). It is extremely difficult for a person skilled in the art to directly specify the structure of the multilayer film 4 including the $NiO_x$ layer and the like or a difference in structure due to presence/absence of ion assist. Meanwhile, specifying the structure of the multilayer film 4 by executing ion assist during vapor deposition is easily understandable and useful for a person skilled in the art.

During vapor deposition of the NiOx layer, an ion beam, which is an ionized gas, is applied to a substrate. The ion beam contains at least an oxygen ($O_2$) gas. A gas regarding the ion beam may be mixed with a rare gas such as argon gas. That is, the ion beam is an ionized oxygen gas, or a gas mixture of the ionized oxygen gas and the rare gas.

Ni, which has evaporated from an evaporation source through heating, becomes an NiO film (x=1) at the surface of the substrate due to an effect of the oxygen gas regarding the ion beam. At the surface of the NiO film, a part of Ni-O chemical bonding is cut by the ion beam and thereby oxygen deficiency is formed. According to the amount of such oxygen deficiency, x varies, and an $NiO_x$ layer (x is greater than 0 and less than 1) is formed. A possibility that the Ni-O chemical bonding is completely cut by the ion beam is realistically zero, and therefore, x is greater than 0. Meanwhile, a possibility that the Ni-O chemical bonding is not cut at all in spite of the ion beam being applied is also realistically zero, and therefore, x is less than 1.

The amount of oxygen deficiency, i.e., the value of x, can be made constant in one layer by performing heating of a deposition source and application of the ion beam sequentially under the same condition. The $NiO_x$ layer deposited in such a manner has a uniform composition in the thickness direction. Here, the same condition is, for example, a constant voltage in an ion gun (a constant gas ionization voltage), a constant flow rate of the oxygen gas, or constant flow rates of the oxygen gas and the rare gas. In the case of the gas mixture of the oxygen gas and the rare gas, the magnitudes of the flow rates of these gases may be the same or different from each other as long as the flow rate during vapor deposition of one $NiO_x$ layer is constant. From this standpoint, the flow rate of the oxygen gas may be regarded as "constant flow rate" and the flow rate of the rare gas may be regarded as "predetermined flow rate". Application of the ion beam under the same condition can be considered to be application of a constant ion beam.

The value of x is controlled by various characteristics of the ion beam (various settings of the ion gun). For example, the magnitude of x can be varied based on at least one of the magnitude of acceleration voltage of the ion beam and the magnitude of current of the ion beam. When the gas mixture of the oxygen gas and the rare gas is used, the magnitude of x can be varied by changing the mixing ratio between the oxygen gas and the rare gas, or the introduction amounts of the respective gases.

Although the value of x is controllable as described above, directly identifying the same requires through observation of the entire layer by using an atomic-level electron microscope or the like, and therefore, is not realistic. In addition, it is extremely difficult for a person skilled in the art to directly measure the value of x. Therefore, being specified to be an $NiO_x$ layer (x is greater than 0 and less than 1) is useful, and moreover, specifying the $NiO_x$ layer by the characteristics of the ion beam or the like during vapor deposition is easily understandable and useful for a person skilled in the art.

Also in the case of forming an $NiO_x$ layer through sputtering, as in the case of vapor deposition, the value of x is controllable within a range of greater than 0 and less than 1, through setting of deposition conditions such as: the type or flow rate of a sputtering gas; presence/absence of introduced radical gas; the type, flow rate, or supplying power of the radical gas when it is introduced; the degree of vacuum or temperature in a vacuum chamber; the temperature of a sputtering source; the temperature of a target; the temperature of the substrate; etc.

The dielectric layer 8 is a layer made of a dielectric.

The dielectric layer 8 realizes an anti-reflection function when being combined with the light absorbing layer 6. That is, the light absorbing layers 6 and the dielectric layers 8 alternately disposed allow the optical multilayer film 4 to serve as an anti-reflection film. Each light absorbing layer 6 can be regarded as a high refractive index layer. Each dielectric layer 8 is a low refractive index layer or an intermediate refractive index layer with respect to the high refractive index layer.

A main component of the dielectric layer 8 is preferably a translucent metal compound. The main component of the dielectric layer 8 is at least one of $SiO_2$ (silicon dioxide or silica), $MgF_2$ (magnesium difluoride), $Nb_2O_5$ (diniobium pentaoxide), $TiO_2$ (titanium dioxide or titania), $Al_2O_3$ (dialuminum trioxide or alumina), $ZrO_2$ (zircon dioxide or zirconia), $Ta_2O_5$ (tantalum pentaoxide), $Si_3N_4$ (trisilicon tetranitride or silicon nitride), and $SiN_yO_z$ (silicon oxynitride), for example.

From the viewpoint of ease of film deposition, the plurality of dielectric layers 8 preferably include the same main component, and more preferably include the same components.

The $SiN_yO_z$ layer, like the $NiO_x$ layer, can be formed through vapor deposition or sputtering in which an ionized oxygen gas and an ionized nitride gas are applied by using Si as a vapor deposition source or a sputtering source. Since $SiN_yO_z$ is obtained by one or more N atoms or O atoms binding to an Si atom but does not become $Si_3N_4$ or $SiO_2$ $0<y<4/3$, $0<z<2$ are satisfied.

The values of y and z are controllable like the value of x of $NiO_x$. In addition, like the value of x, directly identifying the values of y and z is not realistic, and it is extremely difficult for a person skilled in the art to directly measure the values of y and z. Therefore, being specified to be $SiN_yO_z$ ($0<y<4/3$, $0<z<2$) is useful, and moreover, the $SiN_yO_z$ layer being specified by the characteristics of the ion beam or the like during vapor deposition is easily understandable and useful for a person skilled in the art.

An outermost layer 10, which is a layer most distant from the base 2 (a layer closest to the surface side (air side) of the light-shielding member 1) in the optical multilayer film 4, is preferably a dielectric layer 8 from the viewpoint of ensuring an anti-reflection performance and protecting a light absorbing layer 6. More preferably, a main component of the outermost layer 10 is at least one of $SiO_2$ and $MgF_2$. The outermost layer 10 preferably has a physical film thickness not less than 62 nm and not greater than 91 nm from the viewpoint of ensuring anti-reflection performance.

At least one of the dielectric layers 8 excluding the outermost layer 10 preferably has a physical film thickness not less than 26 nm and not greater than 85 nm from the viewpoint of ensuring anti-reflection performance. Hereinafter, a layer, which is a dielectric layer 8 having a physical film thickness within the above range and is most distant from the base 2 (closest to the outermost layer 10), is referred to as a next outermost layer 12. That is, the next outermost layer 12 is a dielectric layer 8 which is closest to the outermost layer 10 and has a physical film thickness not less than 26 nm and not greater than 85 nm.

In the optical multilayer film 4, from the viewpoint of ensuring anti-reflection performance, a total of the physical film thicknesses (surface-side light absorption thickness C) of one or more light absorbing layers 6 (surface-side light absorbing layer 14) disposed between the outermost layer 10 and the next outermost layer 12 is preferably not less than 6 nm and not greater than 17 nm.

Meanwhile, in the optical multilayer film 4, from the viewpoint of ensuring anti-reflection performance and a high optical density, a total of the physical film thicknesses of one or more light absorbing layers 6 (base-side light absorbing layers 16) disposed between the next outermost layer 12 and the base 2 is preferably not less than 60 nm.

Moreover, in the optical multilayer film 4, a specific proportion F is represented by formula (1) below regarding the surface-side light absorption thickness C, the base-side light absorption thickness D, and a total of the physical film thicknesses (specific surface layer thickness E) from a layer having the maximum physical film thickness (base-side maximum-thickness light absorbing layer 18) among the one or more base-side light absorbing layers 16, to the outermost layer 10. From the viewpoint of ensuring anti-reflection performance and a high optical density, the specific proportion F is preferably not smaller than 0.34 (34%). The specific surface layer thickness E includes the physical film thickness of the base-side maximum-thickness light absorbing layer 18 and the physical film thickness of the outermost layer 10.
[Math. 1]

$$F = \frac{C + D}{E} \qquad (1)$$

The light-shielding member 1, including the base 2 and the optical multilayer film 4 as described above, preferably has various kinds of characteristics as follows, from the viewpoint of ensuring excellent blackness.

First, in the light-shielding member 1, an average optical density in a wavelength range of not less than 380 nm and not greater than 780 nm with respect to light having an incident angle not less than 0° and not greater than 8°, is preferably not less than 4.0.

In the light-shielding member 1 (particularly in which the film deposition surface M of the base 2 is an uneven surface), an average regular reflectance of not less than 380 nm and not greater than 780 nm (380-780 nm average regular reflectance) with respect to light having an incident angle not less than 0° and not greater than 8°, is preferably not greater than 0.02%. The 380-780 nm average regular reflectance is a reflectance with respect to light whose incident angle on the optical multilayer film 4 is not less than 0° and not greater than 8°, and the same applies to other regular reflectances.

In the light-shielding member 1 (particularly in which the film deposition surface M of the base 2 is an uneven surface), a lightness L* in L*a*b* colorimetric system measurement (JISZ8729) is preferably not greater than 4.5.

In the light-shielding member 1 in which the film deposition surface M of the base 2 is a mirror-finished surface, an average regular reflectance in a wavelength range of not less than 400 nm and not greater than 700 nm (400-700 nm average regular reflectance) with respect to light having an incident angle not less than 0° and not greater than 8°, is preferably not greater than 0.450%.

In addition, in the light-shielding member 1 in which the film deposition surface M of the base 2 is a mirror-finished surface, the 380-780 nm average regular reflectance is preferably not greater than 0.660%.

In the light-shielding member 1 in which the film deposition surface M of the base 2 is a mirror-finished surface, an average optical density in a wavelength range of not less than 380 nm and not greater than 780 nm (380-780 nm average optical density) with respect to light having an incident angle not less than 0° and not greater than 8° is preferably not less than 2.1.

The light-shielding member 1 including the base 2 on which the optical multilayer film 4 is disposed is used as a shutter blade or a diaphragm blade in a camera, for example. Alternatively, the light-shielding member 1 is applied to an article such as a case of equipment or an interior article of an automobile to provide the article with a coal-black appearance.

As described above, the light-shielding member 1 of the present invention is provided with the base 2, and the optical multilayer film 4 disposed on the film deposition surface M which is one or more surfaces of the base 2. In the optical multilayer film 4, the light absorbing layers 6 absorbing visible light and the dielectric layers 8 made of a dielectric are disposed such that the total number of the layers is not less than 4 and not more than 8. The outermost layer 10 most distant from the base 2 is the dielectric layer 8, and the physical film thickness of the outermost layer 10 is not less than 62 nm and not greater than 91 nm. The surface-side light absorption thickness C, which is a total of the physical film thicknesses of one or more light absorbing layers 6 disposed between the outermost layer 10 and the next outermost layer 12 which is the dielectric layer 8 having the physical film thickness not less than 26 nm and not greater than 85 nm and is closest to the outermost layer 10, is not less than 6 nm and not greater than 17 nm. The base-side light absorption thickness D, which is a total of the physical film thicknesses of one or more light absorbing layers 6 disposed between the next outermost layer 12 and the base 2, is not less than 60 nm. Assuming that the specific surface layer thickness E, which is a total of the physical film thicknesses of layers from the base-side maximum-thickness light absorbing layer 18 having the maximum physical film thickness among the light absorbing layers 6 disposed between the next outermost layer 12 and the base 2, to the outermost layer 10 is a divisor while the sum of the surface-side light absorption thickness C and the base-side light absorption thickness D is a dividend, the specific proportion, $F=(C+D)/E$, obtained as a quotient is not less than 0.34.

Therefore, the light-shielding member 1 having excellent blackness is provided.

The film deposition surface M has irregularities, and the surface roughness of the film deposition surface M is not greater than 1.0 $\mu$m. Thus, the light-shielding member 1 exhibits more excellent blackness.

Furthermore, the base 2 is colored in black. Thus, the light-shielding member 1 exhibits more excellent blackness.

Moreover, each light absorbing layer 6 preferably contains a metal or an unsaturated oxide of a metal, and more preferably, a main component of the light absorbing layer 6 is at least one of Nb, Ti, Ni, Ge, Al, Cr, and an unsaturated oxide of any of these metals. Therefore, the light-shielding member 1 having excellent blackness can be easily manufactured at low cost.

Meanwhile, the dielectric layer 8 preferably contains a metal compound, and more preferably, a main component of the dielectric layer 8 is at least one of $SiO_2$ $MgF_2$, $Nb_2O_5$, $TiO_2$, $Al_2O_3$, $ZrO_2$, $Ta_2O_5$, $Si_3N_4$, and $SiN_yO_z$. Therefore, the light-shielding member 1 having excellent blackness can be easily manufactured at lower cost.

In addition, a main component of the outermost layer 10 is at least one of $SiO_2$ and $MgF_2$. Therefore, the light-shielding member 1 has more excellent blackness.

The light-shielding member 1 is provided with the base 2, and the optical multilayer film 4 disposed on the film deposition surface M which is one or more surfaces of the base 2. The film deposition surface M has irregularities, the 380-780 nm average optical density is not less than 4.0, the 380-780 nm average regular reflectance is not greater than 0.02%, and the lightness L* in L*a*b* colorimetric system measurement (JISZ8729) is not greater than 4.5.

Therefore, the light-shielding member 1 having blackness that has not been seen heretofore is provided.

Furthermore, the light-shielding member 1 is provided with the transparent base 2, and the optical multilayer film 4 disposed on the film deposition surface M which is one or more surfaces of the base 2, the film deposition surface M is a mirror-finished surface, the 400-700 nm average regular reflectance is not greater than 0.450%, the 380-780 nm average regular reflectance is not greater than 0.660%, and the 380-780 nm average optical density is not less than 2.1.

Therefore, the optical multilayer film type light-shielding member 1 formed on the transparent base 2 having the mirror-finished film deposition surface M has blackness that has not been seen heretofore.

Examples

Next, preferred examples of the present invention and comparative examples not belonging to the present invention will be described.

The present invention is not limited to the examples described below. According to interpretation of the present invention, the examples below may be substantially regarded as comparative examples, or the comparative examples below may be substantially regarded as examples.

[Example 1, Comparative Example 1]

From the viewpoint of ensuring excellent blackness, the base 2 is preferably an uneven base having irregularities because irregular reflection can be caused at the surface of the base 2.

In Example 1 (Examples 1-1 to 1-4) and Comparative Example 1 (Comparative Examples 1-1 to 1-2), the base 2 is a sheet-shaped uneven base made of colorless and transparent PET (this base 2 has been subjected to matte treatment, has irregularities and a surface roughness 0.6 $\mu$m, and is 20 $\mu$m thick). The optical multilayer film 4 was deposited on one side of the base 2. While the material (PET) itself of the base is colorless and transparent, the irregularities cause the base to be semi-transparent like ground glass.

The optical multilayer films 4 of Example 1 and Comparative Example 1 have different layer structures. These layer structures are shown in upper parts of [Table 1], [Table 2] below. Each of the layer structures has a four-layer structure (in which the number of layers is 4) including layers of materials and physical film thicknesses (nm) indicated in the upper parts of [Table 1], [Table 2]. Regarding the "layer number" in [Table 1], [Table 2], a first layer (L1) is in contact with the base 2, and a second layer (L2) is disposed on the air side of L1 and is in contact with L1. The same applies to the other following examples. The light-shielding members 1 of Example 1 and Comparative Example 1 do not include any films other than the optical multilayer films 4.

Then, lightness L*, 380-780 nm average regular reflectance, and 380-780 nm average optical density were measured in each of Example 1 and Comparative Example 1. The average regular reflectance and the average optical density were measured by a spectrophotometer (LAMBDA1050 manufactured by PerkinElmer, Inc.). The lightness L* was measured by a colorimeter (spectro2guide manufactured by BYK-Gardner GmbH).

The layers in the following examples and comparative examples including Example 1 and Comparative Example 1 hardly contain components other than main components unless otherwise specified, and are formed through sputtering.

[Table 1]

| Layer number | Example 1-1 | | Example 1-2 | | Example 1-3 | | Example 1-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| L1 | Nb | 150 | Nb | 150 | Nb | 150 | Nb+Si | 150 |
| L2 | $SiO_2$ | 59 | $SiN_yO_z$ | 51 | $SiN_yO_z$ | 52 | $SiO_2$ | 64 |
| L3 | Nb | 9 | Nb | 8 | Nb | 8 | Nb+Si | 14 |
| L4 | $SiO_2$ | 75 | $SiO_2$ | 74 | $SiO_2$ | 74 | $SiO_2$ | 77 |
| Number of layers | 4 | | 4 | | 4 | | 4 | |
| Total film thickness [nm] | 293 | | 283 | | 284 | | 305 | |
| Outermost layer 10 | L4 | | L4 | | L4 | | L4 | |
| Next outermost layer 12 | L2 | | L2 | | L2 | | L2 | |

(continued)

| Layer number | Example 1-1 | | Example 1-2 | | Example 1-3 | | Example 1-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| Surface-side light absorption thickness C | L3 | | L3 | | L3 | | L3 | |
| Base-side light absorption thickness D | L1 | | L1 | | L1 | | L1 | |
| Specific surface layer thickness E | L1-L4 | | L1-L4 | | L1-L4 | | L1-L4 | |
| Specific proportion F | 54% | | 56% | | 56% | | 54% | |
| Lightness L* | 3.00 | | 3.03 | | 3.84 | | 3.97 | |
| 380-780 nm average regular reflectance [%] | 0.010 | | 0.013 | | 0.012 | | 0.010 | |
| 380-780 nm average optical density | 4 or more | | 4 or more | | 4 or more | | 4 or more | |

[Table 2]

| Layer number | Comparative Example 1-1 | | Comparative Example 1-2 | | Comparative Example 1-3 | | Comparative Example 1-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| L1 | Nb | 150 | Nb | 150 | Nb | 150 | Nb | 150 |
| L2 | SiO$_2$ | 55 | SiO$_2$ | 59 | SiO$_2$ | 67 | SiO$_2$ | 59 |
| L3 | Nb | 8 | Nb | 9 | Nb | 9 | Nb | 4 |
| L4 | SiO$_2$ | 59 | SiO$_2$ | 59 | SiO$_2$ | 58 | SiO$_2$ | 75 |
| Number of layers | 4 | | 4 | | 4 | | 4 | |
| Total film thickness [nm] | 272 | | 277 | | 284 | | 288 | |
| Outermost layer 10 | L4 (out of range) | | L4 (out of range) | | L4 (out of range) | | L4 | |

(continued)

| Layer number | Comparative Example 1-1 | | Comparative Example 1-2 | | Comparative Example 1-3 | | Comparative Example 1-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| Next outermost layer 12 | L2 | | L2 | | L2 | | L2 | |
| Surface-side light absorption thickness C | L3 | | L3 | | L3 | | L3 (out of range) | |
| Base-side light absorption thickness D | L1 | | L1 | | L1 | | L1 | |
| Specific surface layer thickness E | L1-L4 | | L1-L4 | | L1-L4 | | L1-L4 | |
| Specific proportion F | 58% | | 57% | | 56% | | 53% | |
| Lightness L* | 4.63 (out of range) | | 6.72 (out of range) | | 14.85 (out of range) | | 28.801 (out of range) | |
| 380-780 nm average regular reflectance [%] | 0.020 | | 0.021 (out of range) | | 0.021 (out of range) | | 0.160 (out of range) | |
| 380-780 nm average optical density | 4 or more | | 4 or more | | 4 or more | | 4 or more | |

Lower parts of [Table 1], [Table 2] show the outermost layer 10, the next outermost layer 12, the surface-side light absorption thickness C, the base-side light absorption thickness D, the specific surface layer thickness E, the specific proportion F, the 400-700 nm average regular reflectance, the 380-780 nm average regular reflectance, and the 380-780 nm average optical density of Example 1 and Comparative Example 1, respectively.

The number of layers in the optical multilayer film 4 of Comparative Example 1-1 is 4, which is within the range of not less than 4.

The total physical film thickness of the optical multilayer film 4 of Comparative Example 1-1 is 272 nm, which is within the range of not greater than 400 nm.

The outermost layer 10, as the dielectric layer 8 most distant from the base 2, of Comparative Example 1-1 is L4 ($SiO_2$ layer), and the physical film thickness thereof is 59 nm, which is "not" within the range of not less than 62 nm and not greater than 91 nm.

L2 as the dielectric layer 8 of Comparative Example 1-1 is an $SiO_2$ layer, and the physical film thickness thereof is 55 nm, which is within the range of not less than 26 nm and not greater than 85 nm. Therefore, L2 of Comparative Example 1-1 is the next outermost layer 12.

The surface-side light absorbing layer 14 of Comparative Example 1-1 is L3 (Nb layer) which is the light absorbing layer 6 between L4 as the outermost layer 10 and L2 as the next outermost layer 12, and the physical film thickness (surface-side light absorption thickness C) thereof is 8 nm, which is within the range of not less than 6 nm and not greater than 17 nm.

The base-side light absorbing layer 16 of Comparative Example 1-1 is L1 (Nb layer) which is the light absorbing layer 6 disposed between L2 as the next outermost layer 12 and the base 2, and the physical film thickness (base-side light absorption thickness D) thereof is 150 nm, which is within the range of not less than 60 nm. In order to obtain the light-shielding member 1 whose 380-780 nm average optical density is not less than 4 on the uncolored and semi-transparent base 2, if the optical multilayer film 4 (light absorbing layers 6) is disposed only on one side of the base 2, the total of the physical film thicknesses of the light absorbing layers 6 needs to be about 100 nm or more.

Meanwhile, the total of the physical film thicknesses (specific surface layer thickness E) of layers from L1 as the base-side light absorbing layer 16 to L4 as the outermost layer 10 is 272 nm which is equal to the total physical film thickness, and the specific proportion F of Comparative Example 1-1 is $F=(C+D)/E=(8+150)/272≈0.58$ (58%), which is not less than 34%.

The lightness $L^*$ of Comparative Example 1-1 is 4.63, which is "not" within the range of not greater than 4.5.

The 380-780 nm average regular reflectance of Comparative Example 1-1 is 0.020%, which is within the range of not greater than 0.02%.

The 380-780 nm average optical density of Comparative Example 1-1 is 4 or more, which is within the range of not less than 4.

The number of layers in the optical multilayer film 4 of Comparative Example 1-2 is 4, which is within the range of not less than 4.

The total physical film thickness of the optical multilayer film 4 of Comparative Example 1-2 is 277 nm, which is within the range of not greater than 400 nm.

The outermost layer 10 of Comparative Example 1-2 is L4 ($SiO_2$ layer), and the physical film thickness thereof is 59 nm, which is "not" within the range of not less than 62 nm and not greater than 91 nm.

L2 of Comparative Example 1-2 is an $SiO_2$ layer, and the physical film thickness thereof is 59 nm, which is within the range of not less than 26 nm and not greater than 85 nm. Therefore, L2 of Comparative Example 1-2 is the next outermost layer 12.

The surface-side light absorbing layer 14 of Comparative Example 1-2 is L3 (Nb layer), and the surface-side light absorption thickness C is 9 nm, which is within the range of not less than 6 nm and not greater than 17 nm.

The base-side light absorbing layer 16 of Comparative Example 1-2 is L1 (Nb layer), and the base-side light absorption thickness D is 150 nm, which is within the range of not less than 60 nm.

The specific surface layer thickness E of Comparative Example 1-2 is 277 nm which is equal to the total physical film thickness, and the specific proportion F of Comparative Example 1-2 is $(9+150)/277≈0.57$ (57%), which is not less than 34%.

The lightness $L^*$ of Comparative Example 1-2 is 6.72, which is "not" within the range of not greater than 4.5.

The 380-780 nm average regular reflectance of Comparative Example 1-2 is 0.021%, which is "not" within the range of not greater than 0.02%.

The 380-780 nm average optical density of Comparative Example 1-2 is 4 or more, which is within the range of not less than 4.

The number of layers in the optical multilayer film 4 of Comparative Example 1-3 is 4, which is within the range of not less than 4.

The total physical film thickness of the optical multilayer film 4 of Comparative Example 1-3 is 285 nm, which is within the range of not greater than 400 nm.

The outermost layer 10 of Comparative Example 1-3 is L4 ($SiO_2$ layer), and the physical film thickness thereof is 58 nm, which is "not" within the range of not less than 62 nm and not greater than 91 nm.

L2 of Comparative Example 1-3 is an $SiO_2$ layer, and the physical film thickness thereof is 67 nm, which is within the range of not less than 26 nm and not greater than 85 nm. Therefore, L2 of Comparative Example 1-2 is the next outermost layer 12.

The surface-side light absorbing layer 14 of Comparative Example 1-3 is L3 (Nb layer), and the surface-side light absorption thickness C is 9 nm, which is within the range of not less than 6 nm and not greater than 17 nm.

The base-side light absorbing layer 16 of Comparative Example 1-3 is L1 (Nb layer), and the base-side light absorption thickness D is 150 nm, which is within the range of not less than 60 nm.

The specific surface layer thickness E of Comparative Example 1-3 is 285 nm which is equal to the total physical film thickness, and the specific proportion F of Comparative Example 1-3 is $(9+150)/285≈0.56$ (56%), which is not less than 34%.

The lightness $L^*$ of Comparative Example 1-3 is 14.85, which is "not" within the range of not greater than 4.5.

The 380-780 nm average regular reflectance of Comparative Example 1-3 is 0.031%, which is "not" within the range of not greater than 0.02%.

The 380-780 nm average optical density of Comparative Example 1-3 is 4 or more, which is within the range of not less than 4.

The number of layers in the optical multilayer film 4 of Comparative Example 1-4 is 4, which is within the range of not less than 4.

The total physical film thickness of the optical multilayer film 4 of Comparative Example 1-4 is 285 nm, which is within the range of not greater than 400 nm.

The outermost layer 10 of Comparative Example 1-4 is L4 ($SiO_2$ layer), and the physical film thickness thereof is 75 nm, which is within the range of not less than 62 nm and not greater than 91 nm.

L2 of Comparative Example 1-4 is an $SiO_2$ layer, and the physical film thickness thereof is 59 nm, which is within the range of not less than 26 nm and not greater than 85 nm. Therefore, L2 of Comparative Example 1-4 is the next outermost layer 12.

The surface-side light absorbing layer 14 of Comparative Example 1-4 is L3 (Nb layer), and the surface-side light absorption thickness C is 4 nm, which is "not" within the range of not less than 6 nm and not greater than 17 nm.

The base-side light absorbing layer 16 of Comparative Example 1-4 is L1 (Nb layer), and the base-side light absorption thickness D is 150 nm, which is within the range of not less than 60 nm.

The specific surface layer thickness E of Comparative Example 1-4 is 288 nm which is equal to the total physical film thickness, and the specific proportion F of Comparative Example 1-4 is (4+150)/288≈0.53 (53%), which is not less than 34%.

The lightness L* of Comparative Example 1-4 is 28.801, which is "not" within the range of not greater than 4.5.

The 380-780 nm average regular reflectance of Comparative Example 1-4 is 0.160%, which is "not" within the range of not greater than 0.02%.

The 380-780 nm average optical density of Comparative Example 1-4 is 4 or more, which is within the range of not less than 4.

The number of layers in the optical multilayer film 4 of Example 1-1 is 4, which is within the range of not less than 4.

The total physical film thickness of the optical multilayer film 4 of Example 1-1 is 293 nm, which is within the range of not greater than 400 nm.

The outermost layer 10 of Example 1-1 is L4 ($SiO_2$ layer), and the physical film thickness thereof is 75 nm, which is within the range of not less than 62 nm and not greater than 91 nm.

L2 of Example 1-1 is an $SiO_2$ layer, and the physical film thickness thereof is 59 nm, which is within the range of not less than 26 nm and not greater than 85 nm. Therefore, L2 of Example 1-1 is the next outermost layer 12.

The surface-side light absorbing layer 14 of Example 1-1 is L3 (Nb layer), and the surface-side light absorption thickness C is 9 nm, which is within the range of not less than 6 nm and not greater than 17 nm.

The base-side light absorbing layer 16 of Example 1-1 is L1 (Nb layer), and the base-side light absorption thickness D is 150 nm, which is within the range of not less than 60 nm.

The specific surface layer thickness E of Example 1-1 is 293 nm which is equal to the total physical film thickness, and the specific proportion F of Example 1-1 is (9+150)/293≈0.54 (54%), which is not less than 34%.

The lightness L* of Example 1-1 is 3.00, which is within the range of not greater than 4.5.

The 380-780 nm average regular reflectance of Example 1-1 is 0.010%, which is within the range of not greater than 0.02%.

The 380-780 nm average optical density of Example 1-1 is 4 or more, which is within the range of not less than 4.

The number of layers in the optical multilayer film 4 of Example 1-2 is 4, which is within the range of not less than 4.

The total physical film thickness of the optical multilayer film 4 of Example 1-2 is 283 nm, which is within the range of not greater than 400 nm.

The outermost layer 10 of Example 1-2 is L4 ($SiO_2$ layer), and the physical film thickness thereof is 74 nm, which is within the range of not less than 62 nm and not greater than 91 nm.

L2 of Example 1-2 is an $SiN_yO_z$ layer, and the physical film thickness thereof is 51 nm, which is within the range of not less than 26 nm and not greater than 85 nm. Therefore, L2 of Example 1-2 is the next outermost layer 12. L2, as the $SiN_yO_z$ layer, of Example 1-2 was formed through sputtering at an Si deposition rate of 0.2 nm/s (nanometers per second). During the sputtering, ionized nitrogen gas and oxygen gas were sequentially introduced at 70 sccm (Standard Cubic Centimetre per Minute) and 10 sccm. $SiN_yO_z$ layers described below were similarly formed. The composition of $SiN_yO_z$ (y and z in $SiN_yO_z$) can be changed by changing the flow rate of at least one of the oxygen gas and the nitrogen gas.

The surface-side light absorbing layer 14 of Example 1-2 is L3 (Nb layer), and the surface-side light absorption thickness C is 8 nm, which is within the range of not less than 6 nm and not greater than 17 nm.

The base-side light absorbing layer 16 of Example 1-2 is L1 (Nb layer), and the base-side light absorption thickness D is 150 nm, which is within the range of not less than 60 nm.

The specific surface layer thickness E of Example 1-2 is 283 nm which is equal to the total physical film thickness, and the specific proportion F of Example 1-2 is (8+150)/283≈0.56 (56%), which is not less than 34%.

The lightness L* of Example 1-2 is 3.03, which is within the range of not greater than 4.5.

The 380-780 nm average regular reflectance of Example 1-2 is 0.013%, which is within the range of not greater than 0.02%.

The 380-780 nm average optical density of Example 1-2 is 4 or more, which is within the range of not less than 4.

The number of layers in the optical multilayer film 4 of Example 1-3 is 4, which is within the range of not less than 4.

The total physical film thickness of the optical multilayer film 4 of Example 1-3 is 284 nm, which is within the range of not greater than 400 nm.

The outermost layer 10 of Example 1-3 is L4 ($SiO_2$ layer), and the physical film thickness thereof is 74 nm, which is within the range of not less than 62 nm and not greater than 91 nm.

L2 of Example 1-3 is an $SiN_yO_z$ layer, and the physical film thickness thereof is 52 nm, which is within the range of not less than 26 nm and not greater than 85 nm. Therefore, L2 of Example 1-3 is the next outermost layer 12.

The surface-side light absorbing layer 14 of Example 1-3 is L3 (Nb layer), and the surface-side light absorption thickness C is 8 nm, which is within the range of not less than 6 nm and not greater than 17 nm.

The base-side light absorbing layer 16 of Example 1-3 is L1 (Nb layer), and the base-side light absorption thickness D is 150 nm, which is within the range of not less than 60 nm.

The specific surface layer thickness E of Example 1-3 is 284 nm which is equal to the total physical film thickness, and the specific proportion F of Example 1-3 is $(8+150)/284 \approx 0.56$ (56%), which is not less than 34%.

The lightness $L^*$ of Example 1-3 is 3.84, which is within the range of not greater than 4.5.

The 380-780 nm average regular reflectance of Example 1-3 is 0.012%, which is within the range of not greater than 0.02%.

The 380-780 nm average optical density of Example 1-3 is 4 or more, which is within the range of not less than 4.

The number of layers in the optical multilayer film 4 of Example 1-4 is 4, which is within the range of not less than 4.

The total physical film thickness of the optical multilayer film 4 of Example 1-4 is 305 nm, which is within the range of not greater than 400 nm.

The outermost layer 10 of Example 1-4 is L4 ($SiO_2$ layer), and the physical film thickness thereof is 77 nm, which is within the range of not less than 62 nm and not greater than 91 nm.

L2 of Example 1-4 is an $SiO_2$ layer, and the physical film thickness thereof is 64 nm, which is within the range of not less than 26 nm and not greater than 85 nm. Therefore, L2 of Example 1-4 is the next outermost layer 12.

The surface-side light absorbing layer 14 of Example 1-4 is L3 (Nb+Si layer), and the surface-side light absorption thickness C is 14 nm, which is within the range of not less than 6 nm and not greater than 17 nm.

The base-side light absorbing layer 16 of Example 1-4 is L1 (Nb+Si layer), and the base-side light absorption thickness D is 150 nm, which is within the range of not less than 60 nm.

The specific surface layer thickness E of Example 1-4 is 305 nm which is equal to the total physical film thickness, and the specific proportion F of Example 1-4 is $(14+150)/305 \approx 0.54$ (54%), which is not less than 34%.

The lightness $L^*$ of Example 1-4 is 3.97, which is within the range of not greater than 4.5.

The 380-780 nm average regular reflectance of Example 1-4 is 0.010%, which is within the range of not greater than 0.02%.

The 380-780 nm average optical density of Example 1-4 is 4 or more, which is within the range of not less than 4.

As described above, in Comparative Example 1-1, the physical film thickness of the outermost layer 10 is outside the preferable range, and the lightness $L^*$ is 4.63 which exceeds 4.5 being the upper limit of the preferable range in the uneven base. In this regard, Comparative Example 1-1 is inferior in blackness of the uneven base as the light-shielding member 1.

In Comparative Example 1-2, the physical film thickness of the outermost layer 10 is outside the preferable range, and the lightness $L^*$ is 6.72 which exceeds 4.5 being the upper limit of the preferable range in the uneven base. In addition, the 380-780 nm average regular reflectance is 0.021% which exceeds 0.02% being the upper limit of the preferable range in the uneven base. In this regard, Comparative Example 1-2 is inferior in blackness of the uneven base as the light-shielding member 1.

In Comparative Example 1-3, the physical film thickness of the outermost layer 10 is outside the preferable range, and the lightness $L^*$ is 14.85, which exceeds 4.5 being the upper limit of the preferable range in the uneven base. In addition, the 380-780 nm average regular reflectance is 0.021%, which exceeds 0.02% being the upper limit of the preferable range in the uneven base. In this regard, Comparative Example 1-3 is inferior in blackness of the uneven base as the light-shielding member 1.

In Comparative Example 1-4, the surface-side light absorption thickness C is outside the preferable range, and the lightness $L^*$ is 28.801, which exceeds 4.5 being the upper limit of the preferable range in the uneven base. In addition, the 380-780 nm average regular reflectance is 0.160%, which exceeds 0.02% being the upper limit of the preferable range in the uneven base. In this regard, Comparative Example 1-4 is inferior in blackness of the uneven base as the light-shielding member 1.

Meanwhile, in each of Examples 1-1 to 1-4, the number of layers in the optical multilayer film 4, the total physical film thickness of the optical multilayer film 4, the physical film thickness of the outermost layer 10, the surface-side light absorption thickness C, the base-side light absorption thickness D, the specific surface layer thickness E, and the specific proportion F are respectively within the preferable ranges, the lightness $L^*$ is not greater than 4.5, the 380-780 nm average regular reflectance is not greater than 0.02%, and the 380-780 nm average optical density is not less than 4.

Thus, the light-shielding member 1 having the haze-free coal-black uneven base is obtained.

In the light-shielding member 1 having the transparent uneven base, from the viewpoint of ensuring excellent blackness, it is preferable that the lightness $L^*$ is not greater than 4.5, the 380-780 nm average regular reflectance is not greater than 0.02%, and the 380-780 nm average optical density is not less than 4. In Example 1, these preferable ranges are satisfied.

[Example 2, Comparative Example 2]

In the case where the base 2 is colored in black, even when light absorption in the light absorbing layers 6 is reduced according thereto, there is a possibility that light shielding performance (blackness) of the light-shielding member 1 is maintained. In particular, when the base 2 is a black and uneven base, the base 2 alone allows the 380-780 nm average optical density to be about 4 or more.

Therefore, a light-shielding member 1 of Example 2-1 was formed by depositing the optical multilayer film 4 of Example 1-1 on a black and uneven base. A light-shielding member 1 of Example 2-2 was formed by depositing, on a black and uneven base, an optical multilayer film 4 in which the physical film thickness of the base-side light absorbing layer 16 of Example 1-1 was reduced to 100 nm.

Example 2-3, Comparative Example 2-1, Comparative Example 2-2, and Comparative Example 2-3 were formed such that the physical film thickness of the base-side light absorbing layer 16 was further reduced stepwise. The physical film thickness of the base-side light absorbing layer 16 in Example 2-3 is 60 nm, the physical film thicknesses of the base-side light absorbing layer 16 in Comparative Example 2-1 and Comparative Example 2-2 are 40 nm, and the physical film thickness of the base-side light absorbing layer 16 in Comparative Example 2-3 is 20 nm. In Comparative Example 2-2 and Comparative Example 2-3, the physical film thicknesses of L2 and L4 are slightly adjusted to minimize the reflectance.

In Examples 2-1 to 2-3 (Example 2) and Comparative Examples 2-1 to 2-3, the base 2 is a sheet-shaped uneven base made of PET colored in black (this base 2 has been subjected to matte treatment and coated with a black colorant, has a film deposition surface M having irregularities and a surface roughness of 0.6 μm, and is 20 μm thick). Before deposition, the lightness $L^*$ of the film is 26.0, the 380-780 nm average regular reflectance is 0.12%, and the average optical density is 4 or more. The number of layers in the optical multilayer film 4 is 4 in any example.

Then, the lightness $L^*$, the 380-780 nm average regular reflectance, and the 380-780 nm average optical density in Example 2 and Comparative Example 2 were measured in a similar manner to that for Example 1.

The layer structures and the like of these examples are shown in [Table 3] below in a similar manner to that for [Table 1].

[Table 3]

| | Example 2-1 | | Example 2-2 | | Example 2-3 | | Comparative Example 2-1 | | Comparative Example 2-2 | | Comparative Example 2-3 | |
|---|---|---|---|---|---|---|---|---|---|---|---|---|
| Layer number | Material | Physical film thickness [nm] | Material | Physical film thickness [nm] | Material | Physical film thickness [nm] | Material | Physical film thickness [nm] | Material | Physical film thickness [nm] | Material | Physical film thickness [nm] |
| L1 | Nb | 150 | Nb | 100 | Nb | 60 | Nb | 40 | Nb | 40 | Nb | 20 |
| L2 | $SiO_2$ | 59 | $SiO_2$ | 59 | $SiO_2$ | 59 | $SiO_2$ | 59 | $SiO_2$ | 62 | $SiO_2$ | 69 |
| L3 | Nb | 9 | Nb | 9 | Nb | 9 | Nb | 9 | Nb | 9 | Nb | 9 |
| L4 | $SiO_2$ | 75 | $SiO_2$ | 75 | $SiO_2$ | 75 | $SiO_2$ | 75 | $SiO_2$ | 77 | $SiO_2$ | 79 |
| Number of layers | 4 | | 4 | | 4 | | 4 | | 4 | | 4 | |
| Total film thickness [nm] | 293 | | 243 | | 203 | | 183 | | 188 | | 177 | |
| Outermost layer 10 | L4 | | L4 | | L4 | | L4 | | L4 | | L4 | |
| Next outermost layer 12 | L2 | | L2 | | L2 | | L2 | | L2 | | L2 | |
| Surface-side light absorption thickness C | L3 | | L3 | | L3 | | L3 | | L3 | | L3 | |
| Base-side light absorption thickness D | L1 | | L1 | | L1 | | L1 (out of range) | | L1 (out of range) | | L1 (out of range) | |
| Specific surface layer thickness E | L1-L4 | | L1-L4 | | L1-L4 | | L1-L4 | | L1-L4 | | L1-L4 | |

| Layer number | Example 2-1 | | Example 2-2 | | Example 2-3 | | Comparative Example 2-1 | | Comparative Example 2-2 | | Comparative Example 2-3 | |
|---|---|---|---|---|---|---|---|---|---|---|---|---|
| | Material | Physical film thickness s [nm] | Material | Physical film thickness [nm] | Material | Physical film thickness [nm] | Material | Physical film thickness [nm] | Material | Physical film thickness [nm] | Material | Physical film thickness [nm] |
| Specific proportion F | 54% | | 45% | | 34% | | 27% (out of range) | | 26% (out of range) | | 17% (out of range) | |
| Lightness L* | 2.96 | | 4.1 | | 4.50 | | 4.58 (out of range) | | 4.70 (out of range) | | 5.79 (out of range) | |
| 380-780 nm average regular reflectance [%] | 0.010 | | 0.010 | | 0.009 | | 0.010 | | 0.011 | | 0.012 | |
| 380-780 nm average optical density | 4 or more | | 4 or more | | 4 or more | | 4 or more | | 4 or more | | 4 or more | |

EP 4 109 143 A1

The number of layers in the optical multilayer film 4 of Comparative Example 2-1 is 4, which is within the range of not less than 4.

The total physical film thickness of the optical multilayer film 4 of Comparative Example 2-1 is 183 nm, which is within the range of not greater than 400 nm.

The outermost layer 10 of Comparative Example 2-1 is L4 ($SiO_2$ layer), and the physical film thickness thereof is 75 nm, which is within the range of not less than 62 nm and not greater than 91 nm.

L2 of Comparative Example 2-1 is an $SiO_2$ layer, and the physical film thickness thereof is 59 nm, which is within the range of not less than 26 nm and not greater than 85 nm. Therefore, L2 of the Comparative Example 2-1 is the next outermost layer 12.

The surface-side light absorbing layer 14 of Comparative Example 2-1 is L3 (Nb layer), and the surface-side light absorption thickness C is 9 nm, which is within the range of not less than 6 nm and not greater than 17 nm.

The base-side light absorbing layer 16 of Comparative Example 2-1 is L1 (Nb layer), and the base-side light absorption thickness D is 40 nm, which is "not" within the range of not less than 60 nm.

The specific surface layer thickness E of Comparative Example 2-1 is 183 nm which is equal to the total physical film thickness, and the specific proportion F of Comparative Example 2-1 is $(9+40)/183 \approx 0.27$ (27%), which is "not" equal to or greater than 34%.

The lightness $L*$ of Comparative Example 2-1 is 4.58, which is "not" within the range of not greater than 4.5.

The 380-780 nm average regular reflectance of Comparative Example 2-1 is 0.010%, which is within the range of not greater than 0.02%.

The 380-780 nm average optical density of Comparative Example 2-1 is 4 or more, which is within the range of not less than 4.

The number of layers in the optical multilayer film 4 of Comparative Example 2-2 is 4, which is within the range of not less than 4.

The total physical film thickness of the optical multilayer film 4 of Comparative Example 2-2 is 188 nm, which is within the range of not greater than 400 nm.

The outermost layer 10 of Comparative Example 2-2 is L4 ($SiO_2$ layer), and the physical film thickness thereof is 77 nm, which is within the range of not less than 62 nm and not greater than 91 nm.

L2 of Comparative Example 2-2 is an $SiO_2$ layer, and the physical film thickness thereof is 62 nm, which is within the range of not less than 26 nm and not greater than 85 nm. Therefore, L2 of the Comparative Example 2-2 is the next outermost layer 12.

The surface-side light absorbing layer 14 of Comparative Example 2-2 is L3 (Nb layer), and the surface-side light absorption thickness C is 9 nm, which is within the range of not less than 6 nm and not greater than 17 nm.

The base-side light absorbing layer 16 of Comparative Example 2-2 is L1 (Nb layer), and the base-side light absorption thickness D is 40 nm, which is "not" within the range of not less than 60 nm.

The specific surface layer thickness E of Comparative Example 2-2 is 188 nm which is equal to the total physical film thickness, and the specific proportion F of Comparative Example 2-2 is $(9+40)/188 \approx 0.26$ (26%), which is "not" equal to or greater than 34%.

The lightness $L*$ of Comparative Example 2-2 is 4.70, which is "not" within the range of not greater than 4.5.

The 380-780 nm average regular reflectance of Comparative Example 2-2 is 0.011%, which is within the range of not greater than 0.02%.

The 380-780 nm average optical density of Comparative Example 2-2 is 4 or more, which is within the range of not less than 4.

The number of layers in the optical multilayer film 4 of Comparative Example 2-3 is 4, which is within the range of not less than 4.

The total physical film thickness of the optical multilayer film 4 of Comparative Example 2-3 is 177 nm, which is within the range of not greater than 400 nm.

The outermost layer 10 of Comparative Example 2-3 is L4 ($SiO_2$ layer), and the physical film thickness thereof is 79 nm, which is within the range of not less than 62 nm and not greater than 91 nm.

L2 of Comparative Example 2-3 is an $SiO_2$ layer, and the physical film thickness thereof is 69 nm, which is within the range of not less than 26 nm and not greater than 85 nm. Therefore, L2 of Comparative Example 2-3 is the next outermost layer 12.

The surface-side light absorbing layer 14 of Comparative Example 2-3 is L3 (Nb layer), and the surface-side light absorption thickness C is 9 nm, which is within the range of not less than 6 nm and not greater than 17 nm.

The base-side light absorbing layer 16 of Comparative Example 2-3 is L1 (Nb layer), and the base-side light absorption thickness D is 20 nm, which is "not" within the range of not less than 60 nm.

The specific surface layer thickness E of Comparative Example 2-3 is 177 nm which is equal to the total physical film thickness, and the specific proportion F of Comparative Example 2-3 is $(9+20)/177 \approx 0.17$ (17%), which is "not" equal to or greater than 34%.

The lightness L* of Comparative Example 2-3 is 5.79, which is "not" within the range of not greater than 4.5.

The 380-780 nm average regular reflectance of Comparative Example 2-3 is 0.012%, which is within the range of not greater than 0.02%.

The 380-780 nm average optical density of Comparative Example 2-3 is 4 or more, which is within the range of not less than 4.

The number of layers in the optical multilayer film 4 of Example 2-1 is 4, which is within the range of not less than 4.

The total physical film thickness of the optical multilayer film 4 of Example 2-1 is 243 nm, which is within the range of not greater than 400 nm.

The outermost layer 10 of Example 2-1 is L4 ($SiO_2$ layer), and the physical film thickness thereof is 75 nm, which is within the range of not less than 62 nm and not greater than 91 nm.

L2 of Example 2-1 is an $SiO_2$ layer, and the physical film thickness thereof is 59 nm, which is within the range of not less than 26 nm and not greater than 85 nm. Therefore, L2 of Example 2-1 is the next outermost layer 12.

The surface-side light absorbing layer 14 of Example 2-1 is L3 (Nb layer), and the surface-side light absorption thickness C is 9 nm, which is within the range of not less than 6 nm and not greater than 17 nm.

The base-side light absorbing layer 16 of Example 2-1 is L1 (Nb layer), and the base-side light absorption thickness D is 100 nm, which is within the range of not less than 60 nm.

The specific surface layer thickness E of Example 2-1 is 243 nm which is equal to the total physical film thickness, and the specific proportion F of Example 2-1 is (9+100)/243≈0.45 (45%), which is not less than 34%.

The lightness L* of Example 2-1 is 4.1, which is within the range of not greater than 4.5.

The 380-780 nm average regular reflectance of Example 2-1 is 0.010%, which is within the range of not greater than 0.02%.

The 380-780 nm average optical density of Example 2-1 is 4 or more, which is within the range of not less than 4.

The number of layers of the optical multilayer film 4 of Example 2-2 is 4, which is within the range of not less than 4.

The total physical film thickness of the optical multilayer film 4 of Example 2-2 is 203 nm, which is within the range of not greater than 400 nm.

The outermost layer 10 of Example 2-2 is L4 ($SiO_2$ layer), and the physical film thickness thereof is 75 nm, which is within the range of not less than 62 nm and not greater than 91 nm.

L2 of Example 2-2 is an $SiO_2$ layer, and the physical film thickness thereof is 59 nm, which is within the range of not less than 26 nm and not greater than 85 nm. Therefore, L2 of Example 2-2 is the next outermost layer 12.

The surface-side light absorbing layer 14 of Example 2-2 is L3 (Nb layer), and the surface-side light absorption thickness C is 9 nm, which is within the range of not less than 6 nm and not greater than 17 nm.

The base-side light absorbing layer 16 of Example 2-2 is L1 (Nb layer), and the base-side light absorption thickness D is 60 nm, which is within the range of not less than 60 nm. The specific surface layer thickness E of Example 2-2 is 203 nm which is equal to the total physical film thickness, and the specific proportion F of Example 2-2 is (9+60)/203≈0.34 (34%), which is not less than 34%.

The lightness L* of Example 2-2 is 4.5, which is within the range of not greater than 4.5.

The 380-780 nm average regular reflectance of Example 2-2 is 0.009%, which is within the range of not greater than 0.02%.

The 380-780 nm average optical density of Example 2-2 is 4 or more, which is within the range of not less than 4.

In any of Example 2 and Comparative Example 2, the 380-780 nm average optical density is not less than 4.

However, in Comparative Examples 2-1, 2-2, and 2-3, the lightness L* is 4.58, 4.70, and 5.79, respectively, which exceed 4.5. In this regard, these comparative examples are inferior in blackness of the uneven base as the light-shielding member 1.

Meanwhile, in Example 2, the lightness L* is not greater than 4.5, the 380-780 nm average regular reflectance is not greater than 0.02%, and the 380-780 nm average optical density is not less than 4, thereby providing the light-shielding member 1 having the haze-free coal-black uneven base.

Moreover, in Example 2, the physical film thickness of the light absorbing layer 6 is reduced (in L1, reduced to 100 nm, 60 nm in order) as compared to Example 1-1 (in L1, 150 nm) while maintaining the quality of blackness.

[Example 3, Comparative Example 3]

In Examples 1 and 2, preferable optical multilayer films 4 are obtained on the semi-transparent uneven base and the black-colored uneven base, respectively. Meanwhile, there is a case where ensuring of blackness is required also in a base 2 (mirror-finished base) which is colorless and transparent and has a mirror-finished surface. In addition, various types of measurement and simulation are more easily performed and characteristics of the light-shielding member 1 are more easily grasped in the light-shielding member 1 having the mirror-finished base on which the optical multilayer film 4 is formed, than in the uneven base.

Therefore, Example 3 (Examples 3-1 to 3-4) and Comparative Examples 3 (Comparative Examples 3-1 to 3-4) were sequentially formed such that the base 2 was changed from the colorless, transparent, uneven base to a flat plate-shaped, colorless, transparent base 2 having mirror-finished surfaces at both sides (this base is made of white glass, is 2 mm (millimeters) thick, and has a mirror-finished film deposition surface M on one side), while maintaining the layer structures of the optical multilayer films 4 in Example 1 and Comparative Example 1, followed by examination of properties of these examples and comparative examples. As the properties, 400-700 nm average regular reflectance, 380-780 nm average regular reflectance, and 380-780 nm average optical density were measured.

Next, Example 4 (Examples 4-1 to 4-2) and Comparative Example 4 (Comparative Examples 4-1 to 4-3) were sequentially formed such that the black-colored uneven base 2 was changed from the black-colored uneven base to a colorless and transparent base 2 having mirror-finished surfaces as in Example 3, while maintaining the layer structures of the optical multilayer films 4 in Example 2 and Comparative Example 2, followed by examination of properties of these examples and comparative examples.

In each of Examples 3 and 4 and Comparative Examples 3 and 4, the film deposition surface M of the base 2 is a mirror-finished surface and does not have a diffuse reflection component with respect to incident light traveling straight to the optical multilayer film 4. Therefore, the lightness $L^*$ is measured to be 0 by the above colorimeter.

First, [Table 4] below shows the measurement results of Example 3 and Comparative Example 3.

[Table 4]

| Mirror-finished base | Example 3-1 | Example 3-2 | Example 3-3 | Example 3-4 |
|---|---|---|---|---|
| 400-700 nm average regular reflectance [%] | 0.137 | 0.280 | 0.450 | 0.107 |
| 380-780 nm average regular reflectance [%] | 0.337 | 0.514 | 0.660 | 0.311 |
| 380-780 nm average optical density | 4 or more | 4 or more | 4 or more | 4 or more |
| Mirror-finished base | Comparative Example 3-1 | Comparative Example 3-2 | Comparative Example 3-3 | Comparative Example 3-4 |
| 400-700 nm average regular reflectance [%] | 0.684 (out of range) | 1.288 (out of range) | 2.710 (out of range) | 6.615 (out of range) |
| 380-780 nm average regular reflectance [%] | 1.018 (out of range) | 1.552 (out of range) | 2.774 (out of range) | 7.516 (out of range) |
| 380-780 nm average optical density | 4 or more | 4 or more | 4 or more | 4 or more |

The 400-700 nm average regular reflectance of Comparative Example 3-1 is 0.684%, which is "not" within the range of not greater than 0.450%.

The 380-780 nm average regular reflectance of Comparative Example 3-1 is 1.018%, which is "not" within the range of not greater than 0.660%.

The 380-780 nm average optical density of Comparative Example 3-1 is 4 or more, and is within the range of not less than 2.1 which is a preferable range in the case where the base is colorless and transparent and the film deposition surface M is a mirror-finished surface.

The 400-700 nm average regular reflectance of Comparative Example 3-2 is 1.288%, which is "not" within the range of not greater than 0.450%.

The 380-780 nm average regular reflectance of Comparative Example 3-2 is 1.552%, which is "not" within the range of not greater than 0.660%.

The 380-780 nm average optical density of Comparative Example 3-2 is 4 or more, which is within the range of not less than 2.1.

The 400-700 nm average regular reflectance of Comparative Example 3-3 is 2.710%, which is "not" within the range of not greater than 0.450%.

The 380-780 nm average regular reflectance of Comparative Example 3-3 is 2.774%, which is "not" within the range of not greater than 0.660%.

The 380-780 nm average optical density of Comparative Example 3-3 is 4 or more, which is within the range of not less than 2.1.

The 400-700 nm average regular reflectance of Comparative Example 3-4 is 6.615%, which is "not" within the range of not greater than 0.450%.

The 380-780 nm average regular reflectance of Comparative Example 3-4 is 7.516%, which is "not" within the range of not greater than 0.660%.

The 380-780 nm average optical density of Comparative Example 3-4 is 4 or more, which is within the range of not less than 2.1.

The 400-700 nm average regular reflectance of Example 3-1 is 0.137%, which is within the range of not greater than 0.450%.

The 380-780 nm average regular reflectance of Example 3-1 is 0.337%, which is within the range of not greater than 0.660%.

The 380-780 nm average optical density of Example 3-1 is 4 or more, which is within the range of not less than 2.1.

The 400-700 nm average regular reflectance of Example 3-2 is 0.280%, which is within the range of not greater than 0.450%.

The 380-780 nm average regular reflectance of Example 3-2 is 0.514%, which is within the range of not greater than 0.660%.

The 380-780 nm average optical density of Example 3-2 is 4 or more, which is within the range of not less than 2.1.

The 400-700 nm average regular reflectance of Example 3-3 is 0.450%, which is within the range of not greater than 0.450%.

The 380-780 nm average regular reflectance of Example 3-3 is 0.660%, which is within the range of not greater than 0.660%.

The 380-780 nm average optical density of Example 3-3 is 4 or more, which is within the range of not less than 2.1.

The 400-700 nm average regular reflectance of Example 3-4 is 0.107%, which is within the range of not greater than 0.450%.

The 380-780 nm average regular reflectance of Example 3-4 is 0.311%, which is within the range of not greater than 0.660%.

The 380-780 nm average optical density of Example 3-4 is 4 or more, which is within the range of not less than 2.1.

As described above, in each of Comparative Examples 3-1 to 3-3, the physical film thickness of the outermost layer 10 is outside the preferable range, and the 400-700 nm average regular reflectance and the 380-780 nm average regular reflectance are outside the preferable ranges on the transparent mirror-finished base. In Comparative Example 3-4, the surface-side light absorption thickness C is outside the preferable range, and the 400-700 nm average regular reflectance and the 380-780 nm average regular reflectance are outside the preferable ranges on the transparent mirror-finished base.

Meanwhile, in Example 3, the physical film thickness of the outermost layer 10, the surface-side light absorption thickness C, the base-side light absorption thickness D, the specific surface layer thickness E, and the specific proportion F are respectively within the preferable ranges, and the 400-700 nm average regular reflectance, the 380-780 nm average regular reflectance, and the 380-780 nm average optical density are respectively within the preferable ranges.

[Example 4, Comparative Example 4]

Next, [Table 5] below shows the measurement results of Example 4 and Comparative Example 4. Since the optical multilayer film 4 of Example 1-1 and the optical multilayer film 4 of Example 2-1 are identical in structure to each other, an example obtained by changing the base to a colorless, transparent, mirror-finished base while maintaining the layer structure of the optical multilayer film 4 of Example 2-1 becomes identical to Example 3-1. Therefore, Example 3-1 is shown again in [Table 5].

[Table 5]

| Mirror-finished base | Example 3-1 | Example 4-1 | Example 4-2 | Comparative Example 4-1 | Comparative Example 4-2 | Comparative Example 4-3 |
|---|---|---|---|---|---|---|
| 400-700 nm average regular reflectance [%] | 0.137 | 0.129 | 0.135 | 0.150 | 0.155 | 0.237 |

(continued)

| Mirror-finished base | Example 3-1 | Example 4-1 | Example 4-2 | Comparative Example 4-1 | Comparative Example 4-2 | Comparative Example 4-3 |
|---|---|---|---|---|---|---|
| 380-780 nm average regular reflectance [%] | 0.337 | 0.305 | 0.277 | 0.419 | 0.340 | 0.381 |
| 380-780 nm average optical density | 4 or more | 3.4 | 2.1 | 1.6 (out of range) | 1.6 (out of range) | 1.1 (out of range) |

The 400-700 nm average regular reflectance of Comparative Example 4-1 is 0.150%, which is within the range of not greater than 0.450%.

The 380-780 nm average regular reflectance of Comparative Example 4-1 is 0.419%, which is within the range of not greater than 0.660%.

The 380-780 nm average optical density of Comparative Example 4-1 is 1.6, which is "not" within the range of not less than 2.1.

The 400-700 nm average regular reflectance of Comparative Example 4-2 is 0.155%, which is within the range of not greater than 0.450%.

The 380-780 nm average regular reflectance of Comparative Example 4-2 is 0.340%, which is within the range of not greater than 0.660%.

The 380-780 nm average optical density of Comparative Example 4-2 is 1.6, which is "not" within the range of not less than 2.1.

The 400-700 nm average regular reflectance of Comparative Example 4-3 is 0.237%, which is within the range of not greater than 0.450%.

The 380-780 nm average regular reflectance of Comparative Example 4-3 is 0.381%, which is within the range of not greater than 0.660%.

The 380-780 nm average optical density of Comparative Example 4-3 is 1.1, which is "not" within the range of not less than 2.1.

The 400-700 nm average regular reflectance of Example 4-1 is 0.129%, which is within the range of not greater than 0.450%.

The 380-780 nm average regular reflectance of Example 4-1 is 0.305%, which is within the range of not greater than 0.660%.

The 380-780 nm average optical density of Example 4-1 is 3.4, which is within the range of not less than 2.1.

The 400-700 nm average regular reflectance of Example 4-2 is 0.135%, which is within the range of not greater than 0.450%.

The 380-780 nm average regular reflectance of Example 4-2 is 0.277%, which is within the range of not greater than 0.660%.

The 380-780 nm average optical density of Example 4-2 is 2.1, which is within the range of not less than 2.1.

As described above, in each of Comparative Examples 4-1 to 4-3, the base-side light absorption thickness D and the specific proportion F are outside the preferable ranges, and the 380-780 nm average optical density is outside the preferable range.

Meanwhile, in each of Examples 4-1 to 4-2, the physical film thickness of the outermost layer 10, the surface-side light absorption thickness C, the base-side light absorption thickness D, the specific surface layer thickness E, and the specific proportion F are within the preferable ranges, and the 400-700 nm average regular reflectance, the 380-780 nm average regular reflectance, and the 380-780 nm average optical density are within the preferable ranges.

When the optical multilayer film 4 of the layer structure with which favorable results were obtained on the uneven base (Examples 1, 2) is deposited on a transparent mirror-finished base (Examples 3, 4), the 400-700 nm average regular reflectance is not greater than 0.450%, the 380-780 nm average regular reflectance is not greater than 0.660%, and the 380-780 nm average optical density is not less than 2.1. Therefore, it can be said that the preferable ranges with the transparent mirror-finished base have been determined.

[Example 5, Comparative Example 5]

Furthermore, optical characteristics of various types of optical multilayer films 4 on transparent mirror-finished bases were examined.

That is, as Example 5 (Examples 5-1 to 5-20) and Comparative Example 5 (Comparative Examples 5-1 to 5-8), characteristics of layer structures of various optical multilayer films 4 on a colorless, transparent, mirror-finished base were obtained through simulation as in Examples 3 and 4.

[Table 6] to [Table 12] below show the layer structures and the characteristics of Example 5 and Comparative Example 5.

[Table 6]

| Layer number | Example 5-1 | | Example 5-2 | | Example 5-3 | | Example 5-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| L1 | Nb | 163 | Nb | 149 | Nb | 141 | Nb | 159 |
| L2 | $SiO_2$ | 65 | $Si_3N_4$ | 46 | $Nb_2O_5$ | 26 | $SiO_2$ | 43 |
| L3 | Nb | 8 | Nb | 7 | Nb | 7 | Nb | 12 |
| L4 | $MgF_2$ | 85 | $SiO_2$ | 81 | $Nb_2O_5$ | 14 | $Nb_2O_5$ | 18 |
| L5 | --- | --- | --- | --- | $SiO_2$ | 71 | $SiO_2$ | 70 |
| Number of layers | 4 | | 4 | | 4 | | 5 | |
| Total film thickness [nm] | 321 | | 283 | | 259 | | 302 | |
| Outermost layer 10 | L4 | | L4 | | L5 | | L5 | |
| Next outermost layer 12 | L2 | | L2 | | L2 | | L2 | |
| Surface-side light absorption thickness C | L3 | | L3 | | L3 | | L3 | |
| Base-side light absorption thickness D | L1 | | L1 | | L1 | | L1 | |
| Specific surface layer thickness E | L1-L4 | | L1-L4 | | L1-L5 | | L1-L5 | |
| Specific proportion F | 53% | | 55% | | 57% | | 57% | |
| 400-700 nm average regular reflectance [%] | 0.147 | | 0.254 | | 0.286 | | 0.262 | |
| 380-780 nm average regular reflectance [%] | 0.247 | | 0.452 | | 0.592 | | 0.425 | |

(continued)

| Layer number | Example 5-1 | | Example 5-2 | | Example 5-3 | | Example 5-4 | |
|---|---|---|---|---|---|---|---|---|
| | Material | Physical film thickness [nm] | Material | Physical film thickness [nm] | Material | Physical film thickness [nm] | Material | Physical film thickness [nm] |
| 380-780 nm average optical density | 4 or more | | 4 or more | | 4 or more | | 4 or more | |

[Table 7]

| Layer number | Example 5-5 | | Example 5-6 | | Example 5-7 | | Example 5-8 | |
|---|---|---|---|---|---|---|---|---|
| | Material | Physical film thickness [nm] | Material | Physical film thickness [nm] | Material | Physical film thickness [nm] | Material | Physical film thickness [nm] |
| L1 | Nb | 140 | Nb | 141 | Nb | 150 | Nb | 150 |
| L2 | $Al_2O_3$ | 50 | $TiO_2$ | 26 | $MgF_2$ | 66 | $ZrO_2$ | 42 |
| L3 | Nb | 8 | Nb | 7 | Nb | 9 | Nb | 6 |
| L4 | $SiO_2$ | 76 | $TiO_2$ | 14 | $SiO_2$ | 77 | $SiO_2$ | 79 |
| L5 | --- | --- | $SiO_2$ | 71 | | | --- | --- |
| Number of layers | 4 | | 4 | | 4 | | 4 | |
| Total film thickness [nm] | 274 | | 259 | | 302 | | 277 | |
| Outermost layer 10 | L4 | | L5 | | L4 | | L4 | |
| Next outermost layer 12 | L2 | | L2 | | L2 | | L2 | |
| Surface-side light absorption thickness C | L3 | | L3 | | L3 | | L3 | |
| Base-side light absorption thickness D | L1 | | L1 | | L1 | | L1 | |
| Specific surface layer thickness E | L1-L4 | | L1-L5 | | L1-L4 | | L1-L4 | |
| Specific proportion F | 54% | | 57% | | 53% | | 56% | |

(continued)

| Layer number | Example 5-5 Material | Example 5-5 Physical film thickness [nm] | Example 5-6 Material | Example 5-6 Physical film thickness [nm] | Example 5-7 Material | Example 5-7 Physical film thickness [nm] | Example 5-8 Material | Example 5-8 Physical film thickness [nm] |
|---|---|---|---|---|---|---|---|---|
| 400-700 nm average regular reflectance [%] | 0.215 | | 0.315 | | 0.284 | | 0.264 | |
| 380-780 nm average regular reflectance [%] | 0.470 | | 0.644 | | 0.346 | | 0.417 | |
| 380-780 nm average optical density | 4 or more | | 4 or more | | 4 or more | | 4 or more | |

[Table 8]

| Layer number | Example 5-9 Material | Example 5-9 Physical film thickness [nm] | Example 5-10 Material | Example 5-10 Physical film thickness [nm] | Example 5-11 Material | Example 5-11 Physical film thickness [nm] | Example 5-12 Material | Example 5-12 Physical film thickness [nm] |
|---|---|---|---|---|---|---|---|---|
| L1 | Nb | 150 | Ti | 135 | NiOx | 150 | Ge | 250 |
| L2 | $Ta_2O_5$ | 39 | $SiO_2$ | 73 | $SiO_2$ | 71 | $SiO_2$ | 36 |
| L3 | Nb | 6 | Ti | 16 | NiOx | 15 | Ge | 8 |
| L4 | $SiO_2$ | 79 | $SiO_2$ | 71 | $SiO_2$ | 76 | $SiO_2$ | 62 |
| Number of layers | 4 | | 4 | | 4 | | 4 | |
| Total film thickness [nm] | 274 | | 295 | | 312 | | 356 | |
| Outermost layer 10 | L4 | | L4 | | L4 | | L4 | |
| Next outermost layer 12 | L2 | | L2 | | L2 | | L2 | |
| Surface-side light absorption thickness C | L3 | | L3 | | L3 | | L3 | |

(continued)

| Layer number | Example 5-9 | | Example 5-10 | | Example 5-11 | | Example 5-12 | |
|---|---|---|---|---|---|---|---|---|
| | Material | Physical film thickness [nm] | Material | Physical film thickness [nm] | Material | Physical film thickness [nm] | Material | Physical film thickness [nm] |
| Base-side light absorption thickness D | L1 | | L1 | | L1 | | L1 | |
| Specific surface layer thickness E | L1-L4 | | L1-L4 | | L1-L4 | | L1-L4 | |
| Specific proportion F | 57% | | 51% | | 53% | | 72% | |
| 400-700 nm average regular reflectance [%] | 0.298 | | 0.193 | | 0.393 | | 0.402 | |
| 380-780 nm average regular reflectance [%] | 0.538 | | 0.497 | | 0.653 | | 0.637 | |
| 380-780 nm average optical density | 4 or more | | 3.2 | | 3.4 | | 2.1 | |

[Table 9]

| Layer number | Example 5-13 | | Example 5-14 | | Example 5-15 | | Example 5-16 | |
|---|---|---|---|---|---|---|---|---|
| | Material | Physical film thickness [nm] | Material | Physical film thickness [nm] | Material | Physical film thickness [nm] | Material | Physical film thickness [nm] |
| L1 | Cr | 150 | Al | 60 | Nb | 60 | $SiO_2$ | 194 |
| L2 | $SiO_2$ | 63 | $SiO_2$ | 70 | $SiO_2$ | 61 | Nb | 60 |
| L3 | Cr | 8 | Nb | 17 | Nb | 10 | $SiO_2$ | 61 |
| L4 | $SiO_2$ | 77 | $SiO_2$ | 74 | $SiO_2$ | 75 | Nb | 10 |
| L5 | --- | --- | --- | --- | --- | --- | $SiO_2$ | 75 |
| Number of layers | 4 | | 4 | | 4 | | 5 | |
| Total film thickness [nm] | 298 | | 221 | | 206 | | 400 | |
| Outermost layer 10 | L4 | | L4 | | L4 | | L5 | |

(continued)

| Layer number | Example 5-13 Material | Physical film thickness [nm] | Example 5-14 Material | Physical film thickness [nm] | Example 5-15 Material | Physical film thickness [nm] | Example 5-16 Material | Physical film thickness [nm] |
|---|---|---|---|---|---|---|---|---|
| Next outermost layer 12 | L2 | | L2 | | L2 | | L3 | |
| Surface-side light absorption thickness C | L3 | | L3 | | L3 | | L4 | |
| Base-side light absorption thickness D | L1 | | L1 | | L1 | | L2 | |
| Specific surface layer thickness E | L1-L4 | | L1-L4 | | L1-L4 | | L2-L5 | |
| Specific proportion F | 53% | | 35% | | 34% | | 34% | |
| 400-700 nm average regular reflectance [%] | 0.165 | | 0.241 | | 0.246 | | 0.246 | |
| 380-780 nm average regular reflectance [%] | 0.170 | | 0.562 | | 0.427 | | 0.425 | |
| 380-780 nm average optical density | 4 or more | | 4 or more | | 2.1 | | 2.1 | |

[Table 10]

| Layer number | Example 5-17 Material | Physical film thickness [nm] | Example 5-18 Material | Physical film thickness [nm] | Example 5-19 Material | Physical film thickness [nm] | Example 5-20 Material | Physical film thickness [nm] |
|---|---|---|---|---|---|---|---|---|
| L1 | Nb | 10 | Nb | 105 | Nb | 5 | Nb | 90 |
| L2 | SiO$_2$ | 25 | SiO$_2$ | 81 | SiO$_2$ | 95 | SiO$_2$ | 62 |
| L3 | Nb | 50 | Nb | 16 | Nb | 5 | Nb | 19 |
| L4 | SiO$_2$ | 61 | SiO$_2$ | 85 | SiO$_2$ | 99 | SiO$_2$ | 79 |
| L5 | Nb | 9 | Nb | 7 | Nb | 50 | Nb | 8 |

(continued)

|  | Example 5-17 | | Example 5-18 | | Example 5-19 | | Example 5-20 | |
| --- | --- | --- | --- | --- | --- | --- | --- | --- |
| Layer number | Material | Physical film thickness [nm] | Material | Physical film thickness [nm] | Material | Physical film thickness [nm] | Material | Physical film thickness [nm] |
| L6 | SiO$_2$ | 75 | SiO$_2$ | 88 | SiO$_2$ | 61 | SiO$_2$ | 91 |
| L7 | --- | --- | --- | --- | Nb | 10 | --- | --- |
| L8 | --- | --- | --- | --- | SiO$_2$ | 75 | --- | --- |
| Number of layers | 6 | | 6 | | 8 | | 6 | |
| Total film thickness [nm] | 230 | | 382 | | 400 | | 349 | |
| Outermost layer 10 | L6 | | L6 | | L8 | | L6 | |
| Next outermost layer 12 | L4 | | L4 | | L6 | | L4 | |
| Surface-side light absorption thickness C | L5 | | L5 | | L7 | | L5 | |
| Base-side light absorption thickness D | L1, L3 | | L1, L3 | | L5, L3, L1 | | L1, L3 | |
| Specific surface layer thickness E | L3-L6 | | L1-L6 | | L5-L8 | | L1-L6 | |
| Specific proportion F | 35% | | 34% | | 36% | | 34% | |
| 400-700 nm average regular reflectance [%] | 0.224 | | 0.388 | | 0.274 | | 0.447 | |
| 380-780 nm average regular reflectance [%] | 0.348 | | 0.591 | | 0.540 | | 0.656 | |
| 380-780 nm average optical density | 2.1 | | 3.7 | | 2.3 | | 3.4 | |

[Table 11]

| Layer number | Comparative Example 5-1 Material | Physical film thickness [nm] | Comparative Example 5-2 Material | Physical film thickness [nm] | Comparative Example 5-3 Material | Physical film thickness [nm] | Comparative Example 5-4 Material | Physical film thickness [nm] |
|---|---|---|---|---|---|---|---|---|
| L1 | $SiO_2$ | 57 | Nb | 124 | Nb | 88 | Nb | 150 |
| L2 | Nb | 6 | $Si_3N_4$ | 25 | $SiO_2$ | 30 | $SiO_2$ | 59 |
| L3 | $SiO_2$ | 84 | $SiO_2$ | 70 | $Si_3N_4$ | 35 | Nb | 9 |
| L4 | --- | --- | --- | --- | $SiO_2$ | 70 | $SiO_2$ | 100 |
| Number of layers | 3 (out of range) | | 3 (out of range) | | 4 | | 4 | |
| Total film thickness [nm] | 147 | | 219 | | 223 | | 318 | |
| Outermost layer 10 | L3 | | L3 | | L4 | | L4 (out of range) | |
| Next outermost layer 12 | L1 | | L2 | | L3 | | L2 | |
| Surface-side light absorption thickness C | L2 | | does not exist | | does not exist | | L3 | |
| Base-side light absorption thickness D | does not exist | | L1 | | L1 | | L1 | |
| Specific surface layer thickness E | does not exist | | L1-L3 | | L1-L4 | | L1-L4 | |
| Specific proportion F | incalculable | | incalculable | | incalculable | | 50% | |
| 400-700 nm average regular reflectance [%] | 1.988 (out of range) | | 15.081 (out of range) | | 34.933 (out of range) | | 2.383 (out of range) | |
| 380-780 nm average regular reflectance [%] | 2.870 (out of range) | | 15.673 (out of range) | | 32.241 (out of range) | | 2.367 (out of range) | |
| 380-780 nm average optical density | 0.2 (out of range) | | 2.9 | | 2.1 | | 4.0 | |

[Table 12]

| Layer number | Comparative Example 5-5 | | Comparative Example 5-6 | | Comparative Example 5-7 | | Comparative Example 5-8 | |
| --- | --- | --- | --- | --- | --- | --- | --- | --- |
| | Material | Physical film thickness [nm] | Material | Physical film thickness [nm] | Material | Physical film thickness [nm] | Material | Physical film thickness [nm] |
| L1 | Nb | 150 | Nb | 150 | Nb | 32 | Nb | 5 |
| L2 | $SiO_2$ | 90 | $SiO_2$ | 59 | $SiO_2$ | 200 | $SiO_2$ | 100 |
| L3 | Nb | 9 | Nb | 20 | Nb | 15 | Nb | 5 |
| L4 | $SiO_2$ | 75 | $SiO_2$ | 75 | $SiO_2$ | 75 | $SiO_2$ | 100 |
| L5 | --- | --- | --- | --- | Nb | 9 | Nb | 35 |
| L6 | --- | --- | --- | --- | $SiO_2$ | 75 | $SiO_2$ | 61 |
| L7 | --- | --- | --- | --- | --- | --- | Nb | 10 |
| L8 | --- | --- | --- | --- | --- | --- | $SiO_2$ | 75 |
| Number of layers | 4 | | 4 | | 6 | | 8 | |
| Total film thickness [nm] | 324 | | 304 | | 406 (out of range) | | 391 | |
| Outermost layer 10 | L4 | | L4 | | L6 | | L8 | |
| Next outermost layer 12 | does not exist | | L2 | | L4 | | L6 | |
| Surface-side light absorption thickness C | does not exist | | L3 (out of range) | | L5 | | L7 | |
| Base-side light absorption thickness D | does not exist | | L1 | | L1, L3 (out of range) | | L1, L3, L5 (out range) | |
| Specific surface layer thickness E | does not exist | | L1-L4 | | L1-L6 | | L5-L8 | |
| Specific proportion F | incalculable | | 56% | | 14% (out of range) | | 30% (out of range) | |
| 400-700 nm average regular reflectance [%] | 4.348 (out of range) | | 9.104 (out of range) | | 0.892 (out of range) | | 0.198 | |
| 380-780 nm average regular reflectance [%] | 4.319 (out of range) | | 10.242 (out of range) | | 1.155 (out of range) | | 0.522 | |

(continued)

|  | Comparative Example 5-5 | | Comparative Example 5-6 | | Comparative Example 5-7 | | Comparative Example 5-8 | |
|---|---|---|---|---|---|---|---|---|
| Layer number | Material | Physical film thickness [nm] | Material | Physical film thickness [nm] | Material | Physical film thickness [nm] | Material | Physical film thickness [nm] |
| 380-780 nm average optical density | 4 or more | | 4 or more | | 1.8 (out of range) | | 2.0 (out of range) | |

The number of layers in the optical multilayer film 4 of Comparative Example 5-1 is 3, which is "not" within the range of not less than 4.

The total physical film thickness of the optical multilayer film 4 of Comparative Example 5-1 is 147 nm, which is within the range of not greater than 400 nm.

The outermost layer 10 of Comparative Example 5-1 is L3 ($SiO_2$ layer), and the physical film thickness thereof is 84 nm, which is within the range of not less than 62 nm and not greater than 91 nm.

L1 of Comparative Example 5-1 is an $SiO_2$ layer, and the physical film thickness thereof is 57 nm, which is within the range of not less than 26 nm and not greater than 85 nm. Therefore, L1 of Comparative Example 5-1 is the next outermost layer 12.

The surface-side light absorbing layer 14 of Comparative Example 5-1 is L2 (Nb layer), and the surface-side light absorption thickness C is 6 nm, which is within the range of not less than 6 nm and not greater than 17 nm.

Since the base-side light absorbing layer 16 and the specific surface layer thickness E of Comparative Example 5-1 do "not exist", the specific proportion F of Comparative Example 5-1 is "incalculable".

The 400-700 nm average regular reflectance of Comparative Example 5-1 is 1.988%, which is "not" within the range of not greater than 0.450%.

The 380-780 nm average regular reflectance of Comparative Example 5-1 is 2.870%, which is "not" within the range of not greater than 0.660%.

The 380-780 nm average optical density of Comparative Example 5-1 is 0.2, which is "not" within the range of not less than 2.1.

Comparative Example 5-1 has room for improving blackness.

The number of layers in the optical multilayer film 4 of Comparative Example 5-2 is 3, which is "not" within the range of not less than 4.

The total physical film thickness of the optical multilayer film 4 of Comparative Example 5-2 is 219 nm, which is within the range of not greater than 400 nm.

The outermost layer 10 of Comparative Example 5-2 is L3 ($SiO_2$ layer), and the physical film thickness thereof is 70 nm, which is within the range of not less than 62 nm and not greater than 91 nm.

L2 of Comparative Example 5-2 is an $Si_3N_4$ layer, and the physical film thickness thereof is 25 nm, which is within the range of not less than 26 nm and not greater than 85 nm. Therefore, L2 of Comparative Example 5-2 is the next outermost layer 12.

Since the surface-side light absorbing layer 14 of Comparative Example 5-2 does "not exist", the specific proportion F of Comparative Example 5-2 is "incalculable".

The base-side light absorbing layer 16 of Comparative Example 5-2 is L1 (Nb layer), and the base-side light absorption thickness D is 124 nm, which is within the range of not less than 60 nm.

The specific surface layer thickness E of Comparative Example 5-2 is 219 nm which is equal to the total physical film thickness.

The 400-700 nm average regular reflectance of Comparative Example 5-2 is 15.081%, which is "not" within the range of not greater than 0.450%.

The 380-780 nm average regular reflectance of Comparative Example 5-2 is 15.673%, which is "not" within the range of not greater than 0.660%.

The 380-780 nm average optical density of Comparative Example 5-2 is 2.9, which is within the range of not less than 2.1.

In Comparative Example 5-2, in particular, reduction in reflectance is not sufficient, and there is room for improving blackness.

The number of layers in the optical multilayer film 4 of Comparative Example 5-3 is 4, which is within the range of not less than 4.

The total physical film thickness of the optical multilayer film 4 of Comparative Example 5-3 is 223 nm, which is within the range of not greater than 400 nm.

The outermost layer 10 of Comparative Example 5-3 is L4 ($SiO_2$ layer), and the physical film thickness thereof is 70 nm, which is within the range of not less than 62 nm and not greater than 91 nm.

L3 of Comparative Example 5-3 is an $Si_3N_4$ layer, and the physical film thickness thereof is 35 nm, which is within the range of not less than 26 nm and not greater than 85 nm. Therefore, L3 of Comparative Example 5-3 is the next outermost layer 12.

Since the surface-side light absorbing layer 14 of Comparative Example 5-3 does "not exist", the specific proportion F of Comparative Example 5-3 is "incalculable".

The base-side light absorbing layer 16 of Comparative Example 5-3 is L1 (Nb layer), and the base-side light absorption thickness D is 88 nm, which is within the range of not less than 60 nm.

The specific surface layer thickness E of Comparative Example 5-3 is 223 nm, which is equal to the total physical film thickness.

The 400-700 nm average regular reflectance of Comparative Example 5-3 is 34.933%, which is "not" within the range of not greater than 0.450%.

The 380-780 nm average regular reflectance of Comparative Example 5-3 is 32.241%, which is "not" within the range of not greater than 0.660%.

The 380-780 nm average optical density of Comparative Example 5-3 is 2.1, which is within the range of not less than 2.1.

In Comparative Example 5-3, in particular, reduction in reflectance is not sufficient, and there is room for improving blackness.

The number of layers in the optical multilayer film 4 of Comparative Example 5-4 is 4, which is within the range of not less than 4.

The total physical film thickness of the optical multilayer film 4 of Comparative Example 5-4 is 318 nm, which is within the range of not greater than 400 nm.

The outermost layer 10 of Comparative Example 5-4 is L4 ($SiO_2$ layer), and the physical film thickness thereof is 100 nm, which is "not" within the range of not less than 62 nm and not greater than 91 nm.

L2 of Comparative Example 5-4 is an $SiO_2$ layer, and the physical film thickness thereof is 59 nm, which is within the range of not less than 26 nm and not greater than 85 nm. Therefore, L2 of Comparative Example 5-4 is the next outermost layer 12.

The surface-side light absorbing layer 14 of Comparative Example 5-4 is L3 (Nb layer), and the surface-side light absorption thickness C is 9 nm, which is within the range of not less than 6 nm and not greater than 17 nm.

The base-side light absorbing layer 16 of Comparative Example 5-4 is L1 (Nb layer), and the base-side light absorption thickness D is 150 nm, which is within the range of not less than 60 nm.

The specific surface layer thickness E of Comparative Example 5-4 is 318 nm which is equal to the total physical film thickness, and the specific proportion F of Comparative Example 5-4 is (9+150)/318=0.50 (50%), which is not less than 34%.

The 400-700 nm average regular reflectance of Comparative Example 5-4 is 2.383%, which is "not" within the range of not greater than 0.450%.

The 380-780 nm average regular reflectance of Comparative Example 5-4 is 2.367%, which is "not" within the range of not greater than 0.660%.

The 380-780 nm average optical density of Comparative Example 5-4 is 4.0, which is within the range of not less than 2.1.

In Comparative Example 5-4, in particular, reduction in reflectance is not sufficient, and there is room for improving blackness.

The number of layers in the optical multilayer film 4 of Comparative Example 5-5 is 4, which is within the range of not less than 4.

The total physical film thickness of the optical multilayer film 4 of Comparative Example 5-5 is 324 nm which is within the range of not greater than 400 nm.

The outermost layer 10 of Comparative Example 5-5 is L4 ($SiO_2$ layer), and the physical film thickness thereof is 75 nm, which is within the range of not less than 62 nm and not greater than 91 nm.

L2 of Comparative Example 5-5 is an $SiO_2$ layer, and the physical film thickness thereof is 90 nm, which is "not" within the range of not less than 26 nm and not greater than 85 nm. Therefore, L2 of Comparative Example 5-5 is "not" the next outermost layer 12.

The surface-side light absorbing layer 14 and the base-side light absorbing layer 16 of Comparative Example 5-5 do "not exist" because the next outermost layer 12 does not exist.

The specific surface layer thickness E of Comparative Example 5-5 does not exist because the surface-side light absorbing layer 14 and the base-side light absorbing layer 16 do not exist. The specific proportion F of Comparative Example 5-5 is "incalculable" because the surface-side light absorbing layer 14, the base-side light absorbing layer 16, and the specific surface layer thickness E do not exist.

The 400-700 nm average regular reflectance of Comparative Example 5-5 is 4.348%, which is "not" within the range of not greater than 0.450%.

The 380-780 nm average regular reflectance of Comparative Example 5-5 is 4.319%, which is "not" within the range of not greater than 0.660%.

The 380-780 nm average optical density of Comparative Example 5-5 is 4.0, which is within the range of not less than 2.1.

In Comparative Example 5-5, in particular, reduction in reflectance is not sufficient, and there is room for improving blackness.

The number of layers in the optical multilayer film 4 of Comparative Example 5-6 is 4, which is within the range of not less than 4.

The total physical film thickness of the optical multilayer film 4 of Comparative Example 5-6 is 304 nm, which is within the range of not greater than 400 nm.

The outermost layer 10 of Comparative Example 5-6 is L4 ($SiO_2$ layer), and the physical film thickness thereof is 75 nm, which is within the range of not less than 62 nm and not greater than 91 nm.

L2 of Comparative Example 5-6 is an $SiO_2$ layer, and the physical film thickness is 59 nm, which is within the range of not less than 26 nm and not greater than 85 nm. Therefore, L2 of Comparative Example 5-6 is the next outermost layer 12.

The surface-side light absorbing layer 14 of Comparative Example 5-6 is L3 (Nb layer), and the surface-side light absorption thickness C is 20 nm, which is "not" within the range of not less than 6 nm and not greater than 17 nm.

The base-side light absorbing layer 16 of Comparative Example 5-6 is L1 (Nb layer), and the base-side light absorption thickness D is 150 nm, which is within the range of not less than 60 nm.

The specific surface layer thickness E of Comparative Example 5-6 is 304 nm which is equal to the total physical film thickness, and the specific proportion F of Comparative Example 5-6 is (20+150)/304≈0.56 (56%), which is not less than 34%.

The 400-700 nm average regular reflectance of Comparative Example 5-6 is 9.104%, which is "not" within the range of not greater than 0.450%.

The 380-780 nm average regular reflectance of Comparative Example 5-6 is 10.242%, which is "not" within the range of not greater than 0.660%.

The 380-780 nm average optical density of Comparative Example 5-6 is 4.3, which is within the range of not less than 2.1.

In Comparative Example 5-6, in particular, reduction in reflectance is not sufficient, and there is room for improving blackness.

The number of layers in the optical multilayer film 4 of Comparative Example 5-7 is 6, which is within the range of not less than 4.

The total physical film thickness of the optical multilayer film 4 of Comparative Example 5-7 is 406 nm, which is "not" within the range of not greater than 400 nm.

The outermost layer 10 of Comparative Example 5-7 is L6 ($SiO_2$ layer), and the physical film thickness thereof is 75 nm, which is within the range of not less than 62 nm and not greater than 91 nm.

L4 of Comparative Example 5-7 is an $SiO_2$ layer, and the physical film thickness thereof is 75 nm, which is within the range of not less than 26 nm and not greater than 85 nm. Therefore, L4 of Comparative Example 5-7 is the next outermost layer 12.

The surface-side light absorbing layer 14 of Comparative Example 5-7 is L5 (Nb layer), and the surface-side light absorption thickness C is 9 nm, which is within the range of not less than 6 nm and not greater than 17 nm.

The base-side light absorbing layer 16 of Comparative Example 5-7 includes L1 and L3 (Nb layers), and the base-side light absorption thickness D is 32+15=47 nm, which is "not" within the range of not less than 60 nm. The base-side maximum-thickness light absorbing layer 18 of Comparative Example 5-7 is L1 (Nb layer).

The specific surface layer thickness E of Comparative Example 5-7 is 406 nm which is equal to the total physical film thickness, and the specific proportion F of Comparative Example 5-7 is (9+47)/406≈0.14 (14%), which is "not" equal to or greater than 34%.

The 400-700 nm average regular reflectance of Comparative Example 5-7 is 0.892%, which is "not" within the range of not greater than 0.450%.

The 380-780 nm average regular reflectance of Comparative Example 5-7 is 1.155%, which is "not" within the range of not greater than 0.660%.

The 380-780 nm average optical density of Comparative Example 5-7 is 1.8, which is "not" within the range of not less than 2.1.

In Comparative Example 5-7, in particular, reduction in reflectance is not sufficient, and there is room for improving blackness.

The number of layers in the optical multilayer film 4 of Comparative Example 5-8 is 8, which is within the range of not less than 4.

The total physical film thickness of the optical multilayer film 4 of Comparative Example 5-8 is 391 nm, which is within the range of not greater than 400 nm.

The outermost layer 10 of Comparative Example 5-8 is L8 ($SiO_2$ layer), and the physical film thickness thereof is 75 nm, which is within the range of not less than 62 nm and not greater than 91 nm.

L6 of Comparative Example 5-8 is an $SiO_2$ layer, and the physical film thickness thereof is 61 nm, which is within the range of not less than 26 nm and not greater than 85 nm. Therefore, L6 of Comparative Example 5-8 is the next outermost layer 12.

The surface-side light absorbing layer 14 of Comparative Example 5-8 is L7 (Nb layer), and the surface-side light absorption thickness C is 10 nm, which is within the range of not less than 6 nm and not greater than 17 nm.

The base-side light absorbing layer 16 of Comparative Example 5-8 includes L1, L3, and L5 (Nb layers), and the base-side light absorption thickness D is 35+5+5=45 nm, which is "not" within the range of not less than 60 nm. The base-side maximum-thickness light absorbing layer 18 of Comparative Example 5-8 is L5 (Nb layer).

The specific surface layer thickness E of Comparative Example 5-8 is 181 nm which is a total of the physical film thicknesses of L5 to L8, and the specific proportion F of Comparative Example 5-8 is $(10+45)/181 \approx 0.30$ (30%), which is "not" equal to or greater than 34%.

The 400-700 nm average regular reflectance of Comparative Example 5-8 is 0.198%, which is within the range of not greater than 0.450%.

The 380-780 nm average regular reflectance of Comparative Example 5-8 is 0.522%, which is within the range of not greater than 0.660%.

The 380-780 nm average optical density of Comparative Example 5-8 is 2.0, which is "not" within the range of not less than 2.1.

In Comparative Example 5-8, in particular, the average optical density is not sufficient, and there is room for improving blackness.

Meanwhile, the number of layers in the optical multilayer film 4 of Example 5-1 is 4, which is within the range of not less than 4.

The total physical film thickness of the optical multilayer film 4 of Example 5-1 is 321 nm, which is within the range of not greater than 400 nm.

The outermost layer 10 of Example 5-1 is L4 ($MgF_2$ layer), and the physical film thickness thereof is 85 nm, which is within the range of not less than 62 nm and not greater than 91 nm.

L2 of Example 5-1 is an $SiO_2$ layer, and the physical film thickness thereof is 65 nm, which is within the range of not less than 26 nm and not greater than 85 nm. Therefore, L2 of Example 5-1 is the next outermost layer 12.

The surface-side light absorbing layer 14 of Example 5-1 is L3 (Nb layer), and the surface-side light absorption thickness C is 8 nm, which is within the range of not less than 6 nm and not greater than 17 nm.

The base-side light absorbing layer 16 of Example 5-1 is L1 (Nb layer), and the base-side light absorption thickness D is 163nm, which is within the range of not less than 60 nm.

The specific surface layer thickness E of Example 5-1 is 321 nm which is equal to the total physical film thickness, and the specific proportion F of Example 5-1 is $(8+163)/321 \approx 0.53$ (53%), which is not less than 34%.

The 400-700 nm average regular reflectance of Example 5-1 is 0.147%, which is within the range of not greater than 0.450%.

The 380-780 nm average regular reflectance of Example 5-1 is 0.247%, which is within the range of not greater than 0.660%.

The 380-780 nm average optical density of Example 5-1 is 4 or more, which is within the range of not less than 2.1.

Example 5-1 ensures excellent blackness with respect to both high optical density and low reflectance.

The number of layers in the optical multilayer film 4 of Example 5-2 is 4, which is within the range of not less than 4.

The total physical film thickness of the optical multilayer film 4 of Example 5-2 is 283 nm, which is within the range of not greater than 400 nm.

The outermost layer 10 of Example 5-2 is L4 ($SiO_2$ layer), and the physical film thickness thereof is 81 nm, which is within the range of not less than 62 nm and not greater than 91 nm.

L2 of Example 5-2 is an $Si_3N_4$ layer, and the physical film thickness thereof is 46 nm, which is within the range of not less than 26 nm and not greater than 85 nm. Therefore, L2 of Example 5-2 is the next outermost layer 12.

The surface-side light absorbing layer 14 of Example 5-2 is L3 (Nb layer), and the surface-side light absorption thickness C is 7 nm, which is within the range of not less than 6 nm and not greater than 17 nm.

The base-side light absorbing layer 16 of Example 5-2 is L1 (Nb layer), and the base-side light absorption thickness D is 149 nm, which is within the range of not less than 60 nm.

The specific surface layer thickness E of Example 5-2 is 283 nm which is equal to the total physical film thickness, and the specific proportion F of Example 5-2 is $(7+149)/283 \approx 0.55$ (55%), which is not less than 34%.

The 400-700 nm average regular reflectance of Example 5-2 is 0.254%, which is within the range of not greater than 0.450%.

The 380-780 nm average regular reflectance of Example 5-2 is 0.452%, which is within the range of not greater than 0.660%.

The 380-780 nm average optical density of Example 5-2 is 4 or more, which is within the range of not less than 2.1.

Example 5-2 ensures excellent blackness with respect to both high optical density and low reflectance.

The number of layers in the optical multilayer film 4 of Example 5-3 is 5, which is within the range of not less than 4.

The total physical film thickness of the optical multilayer film 4 of Example 5-3 is 259 nm, which is within the range of not greater than 400 nm.

The outermost layer 10 of Example 5-3 is L5 (SiO$_2$ layer), and the physical film thickness thereof is 71 nm, which is within the range of not less than 62 nm and not greater than 91 nm.

L4 of Example 5-3 is an Nb$_2$O$_5$ layer, and the physical film thickness thereof is 14 nm, which is "not" within the range of not less than 26 nm and not greater than 85 nm. Therefore, L4 of Example 5-3 is "not" the next outermost layer 12. L2 of Example 5-3 is an Nb$_2$O$_5$ layer, and the physical film thickness thereof is 26 nm, which is within the range of not less than 26 nm and not greater than 85 nm. Therefore, L2 of Example 5-3 is the next outermost layer 12.

The surface-side light absorbing layer 14 of Example 5-3 is L3 (Nb layer), and the surface-side light absorption thickness C is 7 nm, which is within the range of not less than 6 nm and not greater than 17 nm.

The base-side light absorbing layer 16 of Example 5-3 is L1 (Nb layer), and the base-side light absorption thickness D is 141 nm, which is within the range of not less than 60 nm.

The specific surface layer thickness E of Example 5-3 is 259 nm which is equal to the total physical film thickness, and the specific proportion F of Example 5-3 is $(7+141)/259 \approx 0.57$ (57%), which not less than 34%.

The 400-700 nm average regular reflectance of Example 5-3 is 0.286%, which is within the range of not greater than 0.450%.

The 380-780 nm average regular reflectance of Example 5-3 is 0.592%, which is within the range of not greater than 0.660%.

The 380-780 nm average optical density of Example 5-3 is 4 or more, which is within the range of not less than 2.1.

Example 5-3 ensures excellent blackness with respect to both high optical density and low reflectance.

The number of layers in the optical multilayer film 4 of Example 5-4 is 5, which is within the range of not less than 4.

The total physical film thickness of the optical multilayer film 4 of Example 5-4 is 302 nm, which is within the range of not greater than 400 nm.

The outermost layer 10 of Example 5-4 is L5 (SiO$_2$ layer), and the physical film thickness thereof is 70 nm, which is within the range of not less than 62 nm and not greater than 91 nm.

L4 of Example 5-4 is an Nb$_2$O$_5$ layer, and the physical film thickness thereof is 18 nm, which is "not" within the range of not less than 26 nm and not greater than 85 nm. Therefore, L4 of Example 5-4 is "not" the next outermost layer 12. L2 of Example 5-4 is an SiO$_2$ layer, and the physical film thickness thereof is 43 nm, which is within the range of not less than 26 nm and not greater than 85 nm. Therefore, L2 of Example 5-4 is the next outermost layer 12.

The surface-side light absorbing layer 14 of Example 5-4 is L3 (Nb layer), and the surface-side light absorption thickness C is 12 nm, which is within the range of not less than 6 nm and not greater than 17 nm.

The base-side light absorbing layer 16 of Example 5-4 is L1 (Nb layer), and the base-side light absorption thickness D is 159 nm, which is within the range of not less than 60 nm.

The specific surface layer thickness E of Example 5-4 is 302 nm which is equal to the total physical film thickness, and the specific proportion F of Example 5-4 is $(12+159)/302 \approx 0.57$ (57%), which is not less than 34%.

The 400-700 nm average regular reflectance of Example 5-4 is 0.262%, which is within the range of not greater than 0.450%.

The 380-780 nm average regular reflectance of Example 5-4 is 0.425%, which is within the range of not greater than 0.660%.

The 380-780 nm average optical density of Example 5-4 is 4 or more, which is within the range of not less than 2.1.

Example 5-4 ensures excellent blackness with respect to both high optical density and low reflectance.

The number of layers in the optical multilayer film 4 of Example 5-5 is 4, which is within the range of not less than 4.

The total physical film thickness of the optical multilayer film 4 of Example 5-5 is 274 nm, which is within the range of not greater than 400 nm.

The outermost layer 10 of Example 5-5 is L4 (SiO$_2$ layer), and the physical film thickness thereof is 76 nm, which is within the range of not less than 62 nm and not greater than 91 nm.

L2 of Example 5-5 is an $Al_2O_3$ layer, and the physical film thickness thereof is 50 nm, which is within the range of not less than 26 nm and not greater than 85 nm. Therefore, L2 of Example 5-5 is the next outermost layer 12.

The surface-side light absorbing layer 14 of Example 5-5 is L3 (Nb layer), and the surface-side light absorption thickness C is 8 nm, which is within the range of not less than 6 nm and not greater than 17 nm.

The base-side light absorbing layer 16 of Example 5-5 is L1 (Nb layer), and the base-side light absorption thickness D is 140 nm, which is within the range of not less than 60 nm.

The specific surface layer thickness E of Example 5-5 is 274 nm which is equal to the total physical film thickness, and the specific proportion F of Example 5-5 is $(8+140)/274 \approx 0.54$ (54%), which is not less than 34%.

The 400-700 nm average regular reflectance of Example 5-5 is 0.215%, which is within the range of not greater than 0.450%.

The 380-780 nm average regular reflectance of Example 5-5 is 0.470%, which is within the range of not greater than 0.660%.

The 380-780 nm average optical density of Example 5-5 is 4 or more, which is within the range of not less than 2.1.

Example 5-5 ensures excellent blackness with respect to both high optical density and low reflectance.

The number of layers in the optical multilayer film 4 of Example 5-6 is 5, which is within the range of not less than 4.

The total physical film thickness of the optical multilayer film 4 of Example 5-6 is 259 nm, which is within the range of not greater than 400 nm.

The outermost layer 10 of Example 5-6 is L5 ($SiO_2$ layer), and the physical film thickness thereof is 71 nm, which is within the range of not less than 62 nm and not greater than 91 nm.

L4 of Example 5-6 is a $TiO_2$ layer, and the physical film thickness thereof is 14 nm, which is "not" within the range of not less than 26 nm and not greater than 85 nm. Therefore, L4 of Example 5-6 is "not" the next outermost layer 12. L2 of Example 5-6 is a $TiO_2$ layer, and the physical film thickness thereof is 26 nm, which is within the range of not less than 26 nm and not greater than 85 nm. Therefore, L2 of Example 5-6 is the next outermost layer 12.

The surface-side light absorbing layer 14 of Example 5-6 is L3 (Nb layer), and the surface-side light absorption thickness C is 7 nm, which is within the range of not less than 6 nm and not greater than 17 nm.

The base-side light absorbing layer 16 of Example 5-6 is L1 (Nb layer), and the base-side light absorption thickness D is 141 nm, which is within the range of not less than 60 nm.

The specific surface layer thickness E of Example 5-6 is 259 nm which is equal to the total physical film thickness, and the specific proportion F of Example 5-6 is $(7+141)/259 \approx 0.57$ (57%), which is not less than 34%.

The 400-700 nm average regular reflectance of Example 5-6 is 0.315%, which is within the range of not greater than 0.450%.

The 380-780 nm average regular reflectance of Example 5-6 is 0.644%, which is within the range of not greater than 0.660%.

The 380-780 nm average optical density of Example 5-6 is 4 or more, which is within the range of not less than 2.1.

Example 5-6 ensures excellent blackness with respect to both high optical density and low reflectance.

The number of layers in the optical multilayer film 4 of Example 5-7 is 4, which is within the range of not less than 4.

The total physical film thickness of the optical multilayer film 4 of Example 5-7 is 302 nm, which is within the range of not greater than 400 nm.

The outermost layer 10 of Example 5-7 is L4 ($SiO_2$ layer), and the physical film thickness thereof is 80 nm, which is within the range of not less than 62 nm and not greater than 91 nm.

L2 of Example 5-7 is an $MgF_2$ layer, and the physical film thickness thereof is 77 nm, which is within the range of not less than 26 nm and not greater than 85 nm. Therefore, L2 of Example 5-7 is the next outermost layer 12.

The surface-side light absorbing layer 14 of Example 5-7 is L3 (Nb layer), and the surface-side light absorption thickness C is 9 nm, which is within the range of not less than 6 nm and not greater than 17 nm.

The base-side light absorbing layer 16 of Example 5-7 is L1 (Nb layer), and the base-side light absorption thickness D is 150 nm, which is within the range of not less than 60 nm.

The specific surface layer thickness E of Example 5-7 is 302 nm which is equal to the total physical film thickness, and the specific proportion F of Example 5-7 is $(9+150)/302 \approx 0.53$ (53%), which is not less than 34%.

The 400-700 nm average regular reflectance of Example 5-7 is 0.284%, which is within the range of not greater than 0.450%.

The 380-780 nm average regular reflectance of Example 5-7 is 0.346%, which is within the range of not greater than 0.660%.

The 380-780 nm average optical density of Example 5-7 is 4 or more, which is within the range of not less than 2.1.

Example 5-7 ensures excellent blackness with respect to both high optical density and low reflectance.

The number of layers in the optical multilayer film 4 of Example 5-8 is 4, which is within the range of not less than 4.

The total physical film thickness of the optical multilayer film 4 of Example 5-8 is 277 nm, which is within the range of not greater than 400 nm.

The outermost layer 10 of Example 5-8 is L4 ($SiO_2$ layer), and the physical film thickness thereof is 79 nm, which is within the range of not less than 62 nm and not greater than 91 nm.

L2 of Example 5-8 is a $ZrO_2$ layer, and the physical film thickness thereof is 42 nm, which is within the range of not less than 26 nm and not greater than 85 nm. Therefore, L2 of Example 5-8 is the next outermost layer 12.

The surface-side light absorbing layer 14 of Example 5-8 is L3 (Nb layer), and the surface-side light absorption thickness C is 6 nm, which is within the range of not less than 6 nm and not greater than 17 nm.

The base-side light absorbing layer 16 of Example 5-8 is L1 (Nb layer), and the base-side light absorption thickness D is 150 nm, which is within the range of not less than 60 nm.

The specific surface layer thickness E of Example 5-8 is 277 nm which is equal to the total physical film thickness, and the specific proportion F of Example 5-8 is (6+150)/277≈0.56 (56%), which is not less than 34%.

The 400-700 nm average regular reflectance of Example 5-8 is 0.264%, which is within the range of not greater than 0.450%.

The 380-780 nm average regular reflectance of Example 5-8 is 0.417%, which is within the range of not greater than 0.660%.

The 380-780 nm average optical density of Example 5-8 is 4 or more, which is within the range of not less than 2.1.

Example 5-8 ensures excellent blackness with respect to both high optical density and low reflectance.

The number of layers in the optical multilayer film 4 of Example 5-9 is 4, which is within the range of not less than 4.

The total physical film thickness of the optical multilayer film 4 of Example 5-9 is 274 nm, which is within the range of not greater than 400 nm.

The outermost layer 10 of Example 5-9 is L4 ($SiO_2$ layer), and the physical film thickness thereof is 79 nm, which is within the range of not less than 62 nm and not greater than 91 nm.

L2 of Example 5-9 is a $Ta_2O_5$ layer, and the physical film thickness thereof is 39 nm, which is within the range of not less than 26 nm and not greater than 85 nm. Therefore, L2 of Example 5-9 is the next outermost layer 12.

The surface-side light absorbing layer 14 of Example 5-9 is L3 (Nb layer), and the surface-side light absorption thickness C is 6 nm, which is within the range of not less than 6 nm and not greater than 17 nm.

The base-side light absorbing layer 16 of Example 5-9 is L1 (Nb layer), and the base-side light absorption thickness D is 150 nm, which is within the range of not less than 60 nm.

The specific surface layer thickness E of Example 5-9 is 274 nm which is equal to the total physical film thickness, and the specific proportion F of Example 5-9 is (6+150)/274≈0.57 (57%), which is not less than 34%.

The 400-700 nm average regular reflectance of Example 5-9 is 0.298%, which is within the range of not greater than 0.450%.

The 380-780 nm average regular reflectance of Example 5-9 is 0.538%, which is within the range of not greater than 0.660%.

The 380-780 nm average optical density of Example 5-9 is 3.7, which is within the range of not less than 2.1.

Example 5-9 ensures excellent blackness with respect to both high optical density and low reflectance.

The number of layers in the optical multilayer film 4 of Example 5-10 is 4, which is within the range of not less than 4.

The total physical film thickness of the optical multilayer film 4 of Example 5-10 is 295 nm, which is within the range of not greater than 400 nm.

The outermost layer 10 of Example 5-10 is L4 ($SiO_2$ layer), and the physical film thickness thereof is 71 nm, which is within the range of not less than 62 nm and not greater than 91 nm.

L2 of Example 5-10 is an $SiO_2$ layer, and the physical film thickness thereof is 73 nm, which is within the range of not less than 26 nm and not greater than 85 nm. Therefore, L2 of Example 5-10 is the next outermost layer 12.

The surface-side light absorbing layer 14 of Example 5-10 is L3 (Ti layer), and the surface-side light absorption thickness C is 16 nm, which is within the range of not less than 6 nm and not greater than 17 nm.

The base-side light absorbing layer 16 of Example 5-10 is L1 (Ti layer), and the base-side light absorption thickness D is 135 nm, which is within the range of not less than 60 nm.

The specific surface layer thickness E of Example 5-10 is 295 nm which is equal to the total physical film thickness, and the specific proportion F of Example 5-10 is (16+135)/295≈0.51 (51%), which is not less than 34%.

The 400-700 nm average regular reflectance of Example 5-10 is 0.193%, which is within the range of not greater than 0.450%.

The 380-780 nm average regular reflectance of Example 5-10 is 0.497%, which is within the range of not greater than 0.660%.

The 380-780 nm average optical density of Example 5-10 is 3.2, which is within the range of not less than 2.1.

Example 5-10 ensures excellent blackness with respect to both high optical density and low reflectance.

The number of layers in the optical multilayer film 4 of Example 5-11 is 4, which is within the range of not less than 4.

The total physical film thickness of the optical multilayer film 4 of Example 5-11 is 312 nm, which is within the range of not greater than 400 nm.

The outermost layer 10 of the Example 5-11 is L4 ($SiO_2$ layer), and the physical film thickness thereof is 76 nm, which is within the range of not less than 62 nm and not greater than 91 nm.

L2 of Example 5-11 is an $SiO_2$ layer, and the physical film thickness thereof is 71 nm, which is within the range of not less than 26 nm and not greater than 85 nm. Therefore, L2 of Example 5-11 is the next outermost layer 12.

The surface-side light absorbing layer 14 of Example 5-11 is L3 ($NiO_x$ layer), and the surface-side light absorption thickness C is 15 nm, which is within the range of not less than 6 nm and not greater than 17 nm. This $NiO_x$ layer is formed through deposition of Ni at a deposition rate of 0.3 nm/s, and oxygen gas is introduced at 20 sccm during deposition. It is assumed that $NiO_x$ layers described hereinafter are similarly formed. The composition of $NiO_x$ (x in $NiO_x$) can be changed by changing the flow rate of the oxygen gas.

The base-side light absorbing layer 16 of Example 5-11 is L1 ($NiO_x$ layer), and the base-side light absorption thickness D is 150 nm, which is within the range of not less than 60 nm.

The specific surface layer thickness E of Example 5-11 is 312 nm which is equal to the total physical film thickness, and the specific proportion F of Example 5-11 is (15+150)/312≈0.53 (53%), which is not less than 34%.

The 400-700 nm average regular reflectance of Example 5-11 is 0.393%, which is within the range of not greater than 0.450%.

The 380-780 nm average regular reflectance of Example 5-11 is 0.653%, which is within the range of not greater than 0.660%.

The 380-780 nm average optical density of Example 5-11 is 3.4, which is within the range of not less than 2.1.

Example 5-11 ensures excellent blackness with respect to both high optical density and low reflectance.

The number of layers in the optical multilayer film 4 of Example 5-12 is 4, which is within the range of not less than 4.

The total physical film thickness of the optical multilayer film 4 of Example 5-12 is 356 nm, which is within the range of not greater than 400 nm.

The outermost layer 10 of Example 5-12 is L4 ($SiO_2$ layer), and the physical film thickness thereof is 62 nm, which is within the range of not less than 62 nm and not greater than 91 nm.

L2 of Example 5-12 is an $SiO_2$ layer, and the physical film thickness thereof is 36 nm, which is within the range of not less than 26 nm and not greater than 85 nm. Therefore, L2 of Example 5-12 is the next outermost layer 12.

The surface-side light absorbing layer 14 of Example 5-12 is L3 (Ge layer), and the surface-side light absorption thickness C is 8 nm, which is within the range of not less than 6 nm and not greater than 17 nm.

The base-side light absorbing layer 16 of Example 5-12 is L1 (Ge layer), and the base-side light absorption thickness D is 250 nm, which is within the range of not less than 60 nm.

The specific surface layer thickness E of Example 5-12 is 356 nm which is equal to the total physical film thickness, and the specific proportion F of Example 5-12 is (8+250)/356≈0.72 (72%), which is not less than 34%.

The 400-700 nm average regular reflectance of Example 5-12 is 0.402%, which is within the range of not greater than 0.450%.

The 380-780 nm average regular reflectance of Example 5-12 is 0.637%, which is within the range of not greater than 0.660%.

The 380-780 nm average optical density of Example 5-12 is 2.1, which is within the range of not less than 2.1.

Example 5-12 ensures excellent blackness with respect to both high optical density and low reflectance.

The number of layers in the optical multilayer film 4 of Example 5-13 is 4, which is within the range of not less than 4.

The outermost layer 10 of Example 5-13 is L4 ($SiO_2$ layer), and the physical film thickness thereof is 77 nm, which is within the range of not less than 62 nm and not greater than 91 nm.

L2 of Example 5-13 is an $SiO_2$ layer, and the physical film thickness thereof is 63 nm, which is within the range of not less than 26 nm and not greater than 85 nm. Therefore, L2 of Example 5-13 is the next outermost layer 12.

The surface-side light absorbing layer 14 of Example 5-13 is L3 (Cr layer), and the surface-side light absorption thickness C is 8 nm, which is within the range of not less than 6 nm and not greater than 17 nm.

The base-side light absorbing layer 16 of Example 5-13 is L1 (Cr layer), and the base-side light absorption thickness D is 150 nm, which is within the range of not less than 60 nm.

The specific surface layer thickness E of Example 5-13 is 298 nm which is equal to the total physical film thickness, and the specific proportion F of Example 5-13 is (8+150)/298≈0.53 (53%), which is not less than 34%.

The 400-700 nm average regular reflectance of Example 5-13 is 0.165%, which is within the range of not greater than 0.450%.

The 380-780 nm average regular reflectance of Example 5-13 is 0.170%, which is within the range of not greater than 0.660%.

The 380-780 nm average optical density of Example 5-13 is 4 or more, which is within the range of not less than 2.1.

Example 5-13 ensures excellent blackness with respect to both high optical density and low reflectance.

The number of layers in the optical multilayer film 4 of Example 5-14 is 4, which is within the range of not less than 4.

The total physical film thickness of the optical multilayer film 4 of Example 5-14 is 221 nm, which is within the range of not greater than 400 nm.

The outermost layer 10 of Example 5-14 is L4 (SiO$_2$ layer), and the physical film thickness thereof is 70 nm, which is within the range of not less than 62 nm and not greater than 91 nm.

L2 of Example 5-14 is an SiO$_2$ layer, and the physical film thickness thereof is 70 nm, which is within the range of not less than 26 nm and not greater than 85 nm. Therefore, L2 of Example 5-14 is the next outermost layer 12.

The surface-side light absorbing layer 14 of Example 5-14 is L3 (Nb layer), and the surface-side light absorption thickness C is 17 nm, which is within the range of not less than 6 nm and not greater than 17 nm.

The base-side light absorbing layer 16 of Example 5-14 is L1 (A1 layer), and the base-side light absorption thickness D is 60 nm, which is within the range of not less than 60 nm.

The specific surface layer thickness E of Example 5-14 is 221 nm which is equal to the total physical film thickness, and the specific proportion F of Example 5-14 is (17+60)/221=0.35 (35%), which is not less than 34%.

The 400-700 nm average regular reflectance of Example 5-14 is 0.241%, which is within the range of not greater than 0.450%.

The 380-780 nm average regular reflectance of Example 5-14 is 0.562%, which is within the range of not greater than 0.660%.

The 380-780 nm average optical density of Example 5-14 is 4 or more, which is within the range of not less than 2.1.

Example 5-14 ensures excellent blackness with respect to both high optical density and low reflectance.

The number of layers in the optical multilayer film 4 of Example 5-15 is 4, which is within the range of not less than 4.

The total physical film thickness of the optical multilayer film 4 of Example 5-15 is 205 nm, which is within the range of not greater than 400 nm.

The outermost layer 10 of Example 5-15 is L4 (SiO$_2$ layer), and the physical film thickness thereof is 75 nm, which is within the range of not less than 62 nm and not greater than 91 nm.

L2 of Example 5-15 is an SiO$_2$ layer, and the physical film thickness thereof is 61 nm, which is within the range of not less than 26 nm and not greater than 85 nm. Therefore, L2 of Example 5-15 is the next outermost layer 12.

The surface-side light absorbing layer 14 of Example 5-15 is L3 (Nb layer), and the surface-side light absorption thickness C is 10 nm, which is within the range of not less than 6 nm and not greater than 17 nm.

The base-side light absorbing layer 16 of Example 5-15 is L1 (Nb layer), and the base-side light absorption thickness D is 60 nm, which is within the range of not less than 60 nm.

The specific surface layer thickness E of Example 5-15 is 205 nm which is equal to the total physical film thickness, and the specific proportion F of Example 5-15 is (10+60)/205≈0.34 (34%), which is not less than 34%.

The 400-700 nm average regular reflectance of Example 5-15 is 0.246%, which is within the range of not greater than 0.450%.

The 380-780 nm average regular reflectance of Example 5-15 is 0.427%, which is within the range of not greater than 0.660%.

The 380-780 nm average optical density of Example 5-15 is 2.1, which is within the range of not less than 2.1.

Example 5-15 ensures excellent blackness with respect to both high optical density and low reflectance.

The number of layers in the optical multilayer film 4 of Example 5-16 is 5, which is within the range of not less than 4.

The total physical film thickness of the optical multilayer film 4 of Example 5-16 is 400 nm, which is within the range of not greater than 400 nm.

The outermost layer 10 of Example 5-16 is L5 (SiO$_2$ layer), and the physical film thickness thereof is 75 nm, which is within the range of not less than 62 nm and not greater than 91 nm.

L3 of Example 5-16 is an SiO$_2$ layer, and the physical film thickness thereof is 61 nm, which is within the range of not less than 26 nm and not greater than 85 nm. Therefore, L3 of Example 5-16 is the next outermost layer 12.

The surface-side light absorbing layer 14 of Example 5-16 is L4 (Nb layer), and the surface-side light absorption thickness C is 10 nm, which is within the range of not less than 6 nm and not greater than 17 nm.

The base-side light absorbing layer 16 of Example 5-16 is L2 (Nb layer), and the base-side light absorption thickness D is 60 nm, which is within the range of not less than 60 nm.

The specific surface layer thickness E of Example 5-16 is 206 nm which is a total of the physical film thicknesses of L2 to L5, and the specific proportion F of Example 5-16 is (10+60)/206≈0.34 (34%), which is not less than 34%.

The 400-700 nm average regular reflectance of Example 5-16 is 0.246%, which is within the range of not greater than 0.450%.

The 380-780 nm average regular reflectance of Example 5-16 is 0.425%, which is within the range of not greater than 0.660%.

The 380-780 nm average optical density of Example 5-16 is 2.1, which is within the range of not less than 2.1.

Example 5-16 ensures excellent blackness with respect to both high optical density and low reflectance.

The number of layers in the optical multilayer film 4 of Example 5-17 is 6, which is within the range of not less than 4.

The total physical film thickness of the optical multilayer film 4 of Example 5-17 is 230 nm, which is within the range of not greater than 400 nm.

The outermost layer 10 of Example 5-17 is L6 ($SiO_2$ layer), and the physical film thickness thereof is 75 nm, which is within the range of not less than 62 nm and not greater than 91 nm.

L4 of Example 5-17 is an $SiO_2$ layer, and the physical film thickness thereof is 61 nm, which is within the range of not less than 26 nm and not greater than 85 nm. Therefore, L4 of Example 5-17 is the next outermost layer 12.

The surface-side light absorbing layer 14 of Example 5-17 is L5 (Nb layer), and the surface-side light absorption thickness C is 9 nm, which is within the range of not less than 6 nm and not greater than 17 nm.

The base-side light absorbing layer 16 of Example 5-17 includes L1 and L3 (Nb layers), and the base-side light absorption thickness D is 10+50=60 nm, which is within the range of not less than 60 nm. The base-side maximum-thickness light absorbing layer 18 of Example 5-17 is L3 (Nb layer).

The specific surface layer thickness E of Example 5-17 is 195 nm which is equal to the total of the physical film thicknesses of L3 to L6, and the specific proportion F of Example 5-17 is (9+60)/195≈0.35 (35%), which is not less than 34%.

The 400-700 nm average regular reflectance of Example 5-17 is 0.224%, which is within the range of not greater than 0.450%.

The 380-780 nm average regular reflectance of Example 5-17 is 0.348%, which is within the range of not greater than 0.660%.

The 380-780 nm average optical density of Example 5-17 is 2.1, which is within the range of not less than 2.1.

Example 5-17 ensures excellent blackness with respect to both high optical density and low reflectance.

The number of layers in the optical multilayer film 4 of Example 5-18 is 6, which is within the range of not less than 4.

The total physical film thickness of the optical multilayer film 4 of Example 5-18 is 382 nm, which is within the range of not greater than 400 nm.

The outermost layer 10 of Example 5-18 is L6 ($SiO_2$ layer), and the physical film thickness thereof is 88 nm, which is within the range of not less than 62 nm and not greater than 91 nm.

L4 of Example 5-18 is an $SiO_2$ layer, and the physical film thickness thereof is 85 nm, which is within the range of not less than 26 nm and not greater than 85 nm. Therefore, L4 of Example 5-18 is the next outermost layer 12.

The surface-side light absorbing layer 14 of Example 5-18 is L5 (Nb layer), and the surface-side light absorption thickness C is 7 nm, which is within the range of not less than 6 nm and not greater than 17 nm.

The base-side light absorbing layer 16 of Example 5-18 includes L1 and L3 (Nb layers), and the base-side light absorption thickness D is 105+16=121 nm, which is within the range of not less than 60 nm. The base-side maximum-thickness light absorbing layer 18 of Example 5-18 is L1 (Nb layer).

The specific surface layer thickness E of Example 5-18 is 382 nm which is equal to the total physical film thickness, and the specific proportion F of Example 5-18 is (7+121)/382≈0.34 (34%), which is not less than 34%.

The 400-700 nm average regular reflectance of Example 5-18 is 0.388%, which is within the range of not greater than 0.450%.

The 380-780 nm average regular reflectance of Example 5-18 is 0.591%, which is within the range of not greater than 0.660%.

The 380-780 nm average optical density of Example 5-18 is 3.7, which is within the range of not less than 2.1.

Example 5-18 ensures excellent blackness with respect to both high optical density and low reflectance.

The number of layers in the optical multilayer film 4 of Example 5-19 is 8, which is within the range of not less than 4.

The total physical film thickness of the optical multilayer film 4 of Example 5-19 is 400 nm, which is within the range of not greater than 400 nm.

The outermost layer 10 of Example 5-19 is L8 ($SiO_2$ layer), and the physical film thickness thereof is 75 nm, which is within the range of not less than 62 nm and not greater than 91 nm.

L6 of Example 5-19 is an $SiO_2$ layer, and the physical film thickness thereof is 61 nm, which is within the range of not less than 26 nm and not greater than 85 nm. Therefore, L6 of Example 5-19 is the next outermost layer 12.

The surface-side light absorbing layer 14 of Example 5-19 is L7 (Nb layer), and the surface-side light absorption thickness C is 10 nm, which is within the range of not less than 6 nm and not greater than 17 nm.

The base-side light absorbing layer 16 of Example 5-19 includes L1, L3, and L5 (Nb layers), and the base-side light absorption thickness D is 5+5+50=60 nm, which is within the range of not less than 60 nm. The base-side maximum-thickness light absorbing layer 18 of Example 5-19 is L5 (Nb layer).

The specific surface layer thickness E of Example 5-19 is 196 nm which is equal to the total of the physical film thicknesses of L5 to L8, and the specific proportion F of Example 5-19 is $(10+60)/196 \approx 0.36$ (36%), which is not less than 34%.

The 400-700 nm average regular reflectance of Example 5-19 is 0.274%, which is within the range of not greater than 0.450%.

The 380-780 nm average regular reflectance of Example 5-19 is 0.540%, which is within the range of not greater than 0.660%.

The 380-780 nm average optical density of Example 5-19 is 2.3, which is within the range of not less than 2.1.

Example 5-19 ensures excellent blackness with respect to both high optical density and low reflectance.

The number of layers in the optical multilayer film 4 of Example 5-20 is 6, which is within the range of not less than 4.

The total physical film thickness of the optical multilayer film 4 of Example 5-20 is 349 nm, which is within the range of not greater than 400 nm.

The outermost layer 10 of Example 5-20 is L6 ($SiO_2$ layer), and the physical film thickness thereof is 91 nm, which is within the range of not less than 62 nm and not greater than 91 nm.

L4 of Example 5-20 is an $SiO_2$ layer, and the physical film thickness thereof is 79 nm, which is within the range of not less than 26 nm and not greater than 85 nm. Therefore, L4 of Example 5-20 is the next outermost layer 12.

The surface-side light absorbing layer 14 of Example 5-20 is L5 (Nb layer), and the surface-side light absorption thickness C is 8 nm, which is within the range of not less than 6 nm and not greater than 17 nm.

The base-side light absorbing layer 16 of Example 5-20 includes L1 and L3 (Nb layers), and the base-side light absorption thickness D is 90+19=109 nm, which is within the range of not less than 60 nm.

The specific surface layer thickness E of Example 5-20 is 349 nm which is equal to the total physical film thickness, and the specific proportion F of Example 5-20 is $(8+109)/349 \approx 0.34$ (34%), which is not less than 34%.

The 400-700 nm average regular reflectance of Example 5-20 is 0.447%, which is within the range of not greater than 0.450%.

The 380-780 nm average regular reflectance of Example 5-20 is 0.656%, which is within the range of not greater than 0.660%.

The 380-780 nm average optical density of Example 5-20 is 3.4, which is within the range of not less than 2.1.

Example 5-20 ensures excellent blackness with respect to both high optical density and low reflectance.

As described above, in each of Examples 5-1 to 5-20, the number of layers in the optical multilayer film 4, the total physical film thickness of the optical multilayer film 4, the physical film thickness of the outermost layer 10, the surface-side light absorption thickness C, the base-side light absorption thickness D, the specific surface layer thickness E, and the specific proportion F are respectively within the preferable ranges, and the 400-700 nm average regular reflectance, the 380-780 nm average regular reflectance, and the 380-780 nm average optical density are respectively within the preferable ranges on the transparent mirror-finished base.

[Example 6]

Example 6 (Examples 6-1 to 6-3) was formed to confirm a plurality of cases in which the surface roughness of the base 2 was varied within a range of not less than 0.4 $\mu$m and not greater than 1.0. Examples 6-1 and 6-2 are obtained by changing the base of Example 2-1 (black uneven base having a surface roughness of 0.6 $\mu$m) to black uneven bases having different surface roughnesses.

The surface roughness of the base of Example 6-1 is 0.4 $\mu$m. The lightness L* of the base of Example 6-1 (before deposition) is 22.4. The 380-780 nm average regular reflectance of the base of Example 6-1 is 0.23%. The average optical density of the base of Example 6-1 is 4 or more.

The surface roughness of the base of Example 6-2 is 0.5 $\mu$m. The lightness L* of the base of Example 6-2 (before deposition) is 13.4. The 380-780 nm average regular reflectance of the base of Example 6-2 is 0.02%. The average optical density of the base of Example 6-2 is 4 or more.

Example 6-3 was obtained by depositing an optical multilayer film 4 shown in [Table 13] below to a base as follows.

The surface roughness of the base of Example 6-3 is 1.0 $\mu$m. The lightness L* of the base of Example 6-3 (before deposition) is 22.3. The 380-780 nm average regular reflectance of the base of Example 6-3 is 0.08%. The average optical density of the base of Example 6-3 is 4 or more.

The number of layers in the optical multilayer film 4 of Example 6-3 is 7, which is within the range of not less than 4.

The total physical film thickness of the optical multilayer film 4 of Example 6-3 is 292 nm, which is within the range of not greater than 400 nm.

The outermost layer 10 of Example 6-3 is L7 ($SiO_2$ layer), and the physical film thickness thereof is 75 nm, which is within the range of not less than 62 nm and not greater than 91 nm.

L3 of Example 6-3 is an SiO$_2$ layer, and the physical film thickness thereof is 41 nm, which is within the range of not less than 26 nm and not greater than 85 nm. Therefore, L3 of Example 6-3 is the next outermost layer 12.

The surface-side light absorbing layer 14 of Example 6-3 is L6 (Si+Nb layer), and the surface-side light absorption thickness C is 8 nm, which is within the range of not less than 6 nm and not greater than 17 nm. The Si+Nb layer of L6 or L1 is fabricated as follows. That is, Si is sputtered at a deposition rate of 0.21 nm/s, and simultaneously, Nb is sputtered at a deposition rate of 0.20 nm/s, thereby forming the Si+Nb layer. The ratio (volume ratio) of Si to Nb, which is calculated from the ratio of the deposition rates, is about Si:Nb=51:49, and the Si+Nb layer is a mixture film in which Si accounts for more than half. The ratio of Si:Nb can be changed according to the deposition conditions such as the deposition rate. It is difficult for even a person skilled in the art to present a correct value of Si:Nb in the deposited Si+Nb layer because observation over a vast range by using a microscope or the like is required.

The base-side light absorbing layer 16 of Example 6-3 is L1 (Si+Nb layer), and the base-side light absorption thickness D is 150 nm, which is within the range of not less than 60 nm.

The specific surface layer thickness E of Example 6-3 is 292 nm which is equal to the total physical film thickness, and the specific proportion F of Example 6-3 is (8+150)/292≈0.54 (54%), which is not less than 34%.

[Table 14] below shows the surface roughnesses and the confirmation results of Example 6 and Example 2-1 (shown again). The layer structures of Examples 6-1 to 6-2 are identical to those of Examples 1-1 and 2-1 (see [Table 1] and [Table 3]).

[Table 13]

|  |  | Example 6-3 |
|---|---|---|
| Layer number | Material | Physical film thickness [nm] |
| L1 | Nb+Si | 150 |
| L2 | Si$_3$N$_4$ | 6 |
| L3 | SiO$_2$ | 41 |
| L4 | Si$_3$N$_4$ | 6 |
| L5 | Nb+Si | 8 |
| L6 | Si$_3$N$_4$ | 6 |
| L7 | SiO$_2$ | 75 |
| Number of layers | 7 | |
| Total film thickness [nm] | 292 | |
| Outermost layer 10 | L7 | |
| Next outermost layer 12 | L3 | |
| Surface-side light absorption thickness C | L5 | |
| Base-side light absorption thickness D | L1 | |
| Specific surface layer thickness E | L1-L7 | |
| Specific proportion F | 54% | |

[Table 14]

| Uneven base | Example 6-1 | Example 6-2 | Example 2-1 | Example 6-3 |
|---|---|---|---|---|
| Surface roughness | 0.4 | 0.5 | 0.6 | 1.0 |
| Lightness L* | 3.00 | 1.94 | 2.96 | 3.65 |
| 380-780 nm average regular reflectance [%] | 0.011 | 0.008 | 0.010 | 0.006 |
| 380-780 nm average optical density | 4 or more | 4 or more | 4 or more | 4 or more |

The lightness L* of Example 6-1 (surface roughness of 0.4 μm) is 3.00, which is within the range of not greater than 4.5.

The 380-780 nm average regular reflectance of Example 6-1 is 0.011%, which is within the range of not greater than 0.02%.

The 380-780 nm average optical density of Example 6-1 is 4 or more, which is within the range of not less than 4.0.

The lightness L* of Example 6-2 (surface roughness of 0.5 $\mu$m) is 1.94, which is within the range of not greater than 4.5.

The 380-780 nm average regular reflectance of Example 6-2 is 0.008%, which is within the range of not greater than 0.02%.

The 380-780 nm average optical density of Example 6-2 is 4 or more, which is within the range of not less than 4.0.

The lightness L* of Example 2-1 (surface roughness of 0.6 $\mu$m) is 2.96, which is within the range of not greater than 4.5.

The 380-780 nm average regular reflectance of Example 2-1 is 0.010% which is within the range of not greater than 0.02%.

The 380-780 nm average optical density of Example 2-1 is 4 or more, which is within the range of not less than 4.0.

The lightness L* of Example 6-3 (surface roughness of 1.0 $\mu$m) is 3.65, which is within the range of not greater than 4.5.

The 380-780 nm average regular reflectance of Example 6-3 is 0.006%, which is within the range of not greater than 0.02%.

The 380-780 nm average optical density of Example 6-3 is 4 or more, which is within the range of not less than 4.0.

In Examples 6-1 to 6-2, Example 2-1, and Example 6-3, the surface roughness of the base 2 varies within the range of not less than 0.4 $\mu$m and not greater than 1.0 $\mu$m, but the lightness L*, the 380-780 nm average regular reflectance, and the 380-780 nm average optical density are respectively within the preferable ranges in relation to the uneven base, thereby realizing a coal-black light-shielding member 1.

[Example 7]

In a camera module whose miniaturization has been advanced, a light-shielding film is also reduced in thickness. Therefore, when an optical multilayer film 4 is deposited, warpage of a film base due to stress from the optical multilayer film 4 is more likely to occur than in a case of using a plate base. Such warpage in an optical member 1 may inhibit a desired function in the optical member 1 from being performed or may inhibit the optical member 1 from being built in the camera module. That is, suppression of warpage in the light-shielding member 1 on the film base (thin base) may be desired.

Therefore, in Example 7, an optical multilayer film 4 was formed on one side of a film which was a black uneven base having a thickness of 25 $\mu$m, and the resultant film was cut into a 30 mm square (Examples 7-1 to 7-3), followed by observation of occurrence of warpage. In Example 7, the surface roughness of each base is 0.6 $\mu$m, the lightness L* of each base before deposition is 19.3, the 380-780 nm average regular reflectance of each base before deposition is 0.06%, and the average optical density of each base before deposition is 4 or more.

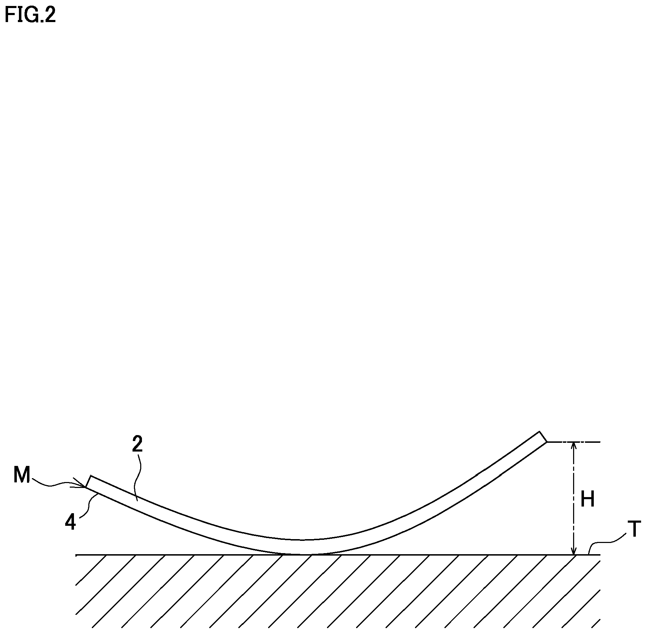

FIG. 2 schematically illustrates warpage of the light-shielding member 1. Depending on the materials of the optical multilayer film 4 (the respective layers), stress occurs in the optical multilayer film 4. A relatively large and thick base 2 withstands the stress and is not warped, but a relatively small and thin base 2 is warped due to the stress of the optical multilayer film 4. In many cases including Example 7, stress occurs in the optical multilayer film 4 of the light-shielding member 1, and the stress causes warpage such that the base 2 protrudes toward the optical multilayer film 4 (film deposition surface M) side. The magnitude of the stress is roughly proportional to the used amount of a material having stress. The degree of warpage is measured as follows. That is, the light-shielding member 1 of Example 7 is left on a horizontal test stand T such that the optical multilayer film 4 side faces downward, and a maximum warpage amount H, which is the maximum height from the test stand T, is measured as the degree of warpage.

In addition, the lightness L*, the 380-780 nm average regular reflectance, and the 380-780 nm average optical density of Example 7 were measured in a similar manner to that for Example 1.

These layer structures and the like are shown in [Table 15] below in a similar manner to that for [Table 1].

[Table 15]

| Layer number | Example 7-1 | | Example 7-2 | | Example 7-3 | |
|---|---|---|---|---|---|---|
| | Material | Physical film thickness [nm] | Material | Physical film thickness [nm] | Material | Physical film thickness [nm] |
| L1 | Nb+Si | 155 | Nb+Si | 258 | Nb+Si | 358 |
| L2 | $Si_3N_4$ | 6 | $Si_3N_4$ | 6 | $Si_3N_4$ | 6 |

(continued)

| Layer number | Example 7-1 | | Example 7-2 | | Example 7-3 | |
|---|---|---|---|---|---|---|
| | Material | Physical film thickness [nm] | Material | Physical film thickness [nm] | Material | Physical film thickness [nm] |
| L3 | $SiO_2$ | 41 | $SiO_2$ | 41 | $SiO_2$ | 41 |
| L4 | $Si_3N_4$ | 6 | $Si_3N_4$ | 6 | $Si_3N_4$ | 6 |
| L5 | Nb+Si | 8 | Nb+Si | 8 | Nb+Si | 8 |
| L6 | $Si_3N_4$ | 6 | $Si_3N_4$ | 6 | $Si_3N_4$ | 6 |
| L7 | $SiO_2$ | 75 | $SiO_2$ | 75 | $SiO_2$ | 75 |
| Number of layers | 7 | | 7 | | 7 | |
| Total film thickness [nm] | 297 | | 400 | | 500 | |
| Outermost layer 10 | L7 | | L7 | | L7 | |
| Next outermost layer 12 | L3 | | L3 | | L3 | |
| Surface-side light absorption thickness C | L5 | | L5 | | L5 | |
| Base-side light absorption thickness D | L1 | | L1 | | L1 | |
| Specific surface layer thickness E | L1-L7 | | L1-L7 | | L1-L7 | |
| Specific proportion F | 55% | 67% | 73% | | | |
| Lightness L* | 3.40 | 2.97 | 2.73 | | | |
| 380-780 nm average regular reflectance [%] | 0.007 | 0.006 | 0.005 | | | |
| 380-780 nm average optical density | 4 or more | 4 or more | 4 or more | | | |
| Maximum warpage amount H[mm] after film deposition | 2.0 | 2.5 | 3.5 | | | |

The number of layers in the optical multilayer film 4 of Example 7-1 is 7, which is within the range of not less than 4.

The total physical film thickness of the optical multilayer film 4 of Example 7-1 is 297 nm, which is within the range of not greater than 400 nm.

The outermost layer 10 of Example 7-1 is L7 ($SiO_2$ layer), and the physical film thickness thereof is 75 nm, which is within the range of not less than 62 nm and not greater than 91 nm.

L3 of Example 7-1 is an $SiO_2$ layer, and the physical film thickness thereof is 41 nm, which is within the range of not less than 26 nm and not greater than 85 nm. Therefore, L3 of Example 7-1 is the next outermost layer 12.

The surface-side light absorbing layer 14 of Example 7-1 is L5 (Si+Nb layer), and the surface-side light absorption thickness C is 8 nm, which is within the range of not less than 6 nm and not greater than 17 nm. Deposition of the Si+Nb layer was performed as described above, and is the same throughout Example 7.

The base-side light absorbing layer 16 of the Example 7-1 is L1 (Si+Nb layer), and the base-side light absorption thickness D is 155 nm, which is within the range of not less than 60 nm.

The specific surface layer thickness E of Example 7-1 is 297 nm which is equal to the total physical film thickness, and the specific proportion F of Example 7-1 is (8+155)/297≈0.55 (55%), which is not less than 34%.

The lightness L* of Example 7-1 is 3.40, which is within the range of not greater than 4.5.

The 380-780 nm average regular reflectance of Example 7-1 is 0.007%, which is within the range of not greater than 0.02%.

The 380-780 nm average optical density of Example 7-1 is 4 or more, which is within the range of not less than 4.0.

Example 7-1 ensures excellent blackness with respect to both high optical density and low reflectance.

The maximum warpage amount H of Example 7-1 is 2.0 mm, which is relatively small.

The number of layers in the optical multilayer film 4 of Example 7-2 is 7, which is within the range of not less than 4.

The total physical film thickness of the optical multilayer film 4 of Example 7-2 is 400 nm, which is within the range of not greater than 400 nm.

The outermost layer 10 of Example 7-2 is L7 ($SiO_2$ layer), and the physical film thickness thereof is 75 nm, which is within the range of not less than 62 nm and not greater than 91 nm.

L3 of Example 7-2 is an $SiO_2$ layer, and the physical film thickness thereof is 41 nm, which is within the range of not less than 26 nm and not greater than 85 nm. Therefore, L3 of Example 7-2 is the next outermost layer 12.

The surface-side light absorbing layer 14 of Example 7-2 is L5 (Si+Nb layer), and the surface-side light absorption thickness C is 8 nm, which is within the range of not less than 6 nm and not greater than 17 nm.

The base-side light absorbing layer 16 of Example 7-2 is L1 (Si+Nb layer), and the base-side light absorption thickness D is 258 nm, which is within the range of not less than 60 nm.

The specific surface layer thickness E of Example 7-2 is 400 nm which is equal to the total physical film thickness, and the specific proportion F of Example 7-2 is (8+258)/400≈0.67 (67%), which is not less than 34%.

The lightness $L^*$ of Example 7-2 is 2.97, which is within the range of not greater than 4.5.

The 380-780 nm average regular reflectance of Example 7-2 is 0.006%, which is within the range of not greater than 0.02%.

The 380-780 nm average optical density of Example 7-2 is 4 or more, which is within the range of not less than 4.0.

Example 7-2 ensures excellent blackness with respect to both high optical density and low reflectance.

The maximum warpage amount H of Example 7-2 is 2.5 mm, which is relatively small.

The number of layers in the optical multilayer film 4 of Example 7-3 is 7, which is within the range of not less than 4.

The total physical film thickness of the optical multilayer film 4 of Example 7-3 is 500 nm, which is "not" within the range of not greater than 400 nm. In Claim 2 dependent from Claim 1, it is specified that the total physical film thickness of the optical multilayer film 4 is not greater than 400 nm.

The outermost layer 10 of Example 7-3 is L7 ($SiO_2$ layer), and the physical film thickness thereof is 75 nm, which is within the range of not less than 62 nm and not greater than 91 nm.

L3 of Example 7-3 is an $SiO_2$ layer, and the physical film thickness thereof is 41 nm, which is within the range of not less than 26 nm and not greater than 85 nm. Therefore, L3 of Example 7-3 is the next outermost layer 12.

The surface-side light absorbing layer 14 of Example 7-3 is L5 (Si+Nb layer), and the surface-side light absorption thickness C is 8 nm, which is within the range of not less than 6 nm and not greater than 17 nm.

The base-side light absorbing layer 16 of Example 7-3 is L1 (Si+Nb layer), and the base-side light absorption thickness D is 358 nm, which is within the range of not less than 60 nm.

The specific surface layer thickness E of Example 7-3 is 500 nm which is equal to the total physical film thickness, and the specific proportion F of Example 7-3 is (8+358)/500≈0.73 (73%), which is not less than 34%.

The lightness $L^*$ of Example 7-3 is 2.73, which is within the range of not greater than 4.5.

The 380-780 nm average regular reflectance of Example 7-3 is 0.005%, which is within the range of not greater than 0.02%.

The 380-780 nm average optical density of Example 7-3 is 4 or more, which is within the range of not less than 4.0.

Example 7-3 ensures excellent blackness with respect to both high optical density and low reflectance.

The maximum warpage amount H of Example 7-3 is 3.5 mm, which is relatively great. From the viewpoint of reducing the degree of warpage, the total physical film thickness of the optical multilayer film 4 is preferably not greater than 400 nm, which allows the maximum warpage amount H to be not greater than 2.5 mm on the 30 mm square base having a thickness of 25 μm.

DESCRIPTION OF THE REFERENCE CHARACTERS

1      light-shielding member
2      base
4      optical multilayer film
6      light absorbing layer
8      dielectric layer
10    outermost layer

12    next outermost layer
14    surface-side light absorbing layer
16    base-side light absorbing layer
18    base-side maximum thickness light absorbing layer
C     surface-side light absorption thickness
D     base-side light absorption thickness
E     specific surface layer thickness
M     film deposition surface

**Claims**

1.  A light-shielding member comprising:

    a base; and
    an optical multilayer film disposed on a film deposition surface which is one or more surfaces of the base, wherein the optical multilayer film includes light absorbing layers that absorb visible light and dielectric layers that are made of a dielectric such that a total number of the layers is 4 or more,
    an outermost layer most distant from the base is the dielectric layer,
    the outermost layer has a physical film thickness not less than 62 nm and not greater than 91 nm,
    a surface-side light absorption thickness which is a total of physical film thicknesses of one or more of the light absorbing layers disposed between the outermost layer and a next outermost layer is not less than 6 nm and not greater than 17 nm, said next outermost layer being the dielectric layer having a physical film thickness not less than 26 nm and not greater than 85 nm and being closest to the outermost layer,
    a base-side light absorption thickness which is a total of physical film thicknesses of one or more of the light absorbing layers disposed between the next outermost layer and the base is not less than 60 nm, and
    in a case where a specific surface layer thickness which is a total of physical film thicknesses of layers from a base-side maximum thickness light absorbing layer, which has a maximum physical film thickness among the light absorbing layers disposed between the next outermost layer and the base, to the outermost layer is a divisor, and a sum of the surface-side light absorption thickness and the base-side light absorption thickness is a dividend, a specific proportion obtained as a quotient is not less than 0.34.

2.  The light-shielding member according to claim 1, wherein a total physical film thickness of the optical multilayer film is not greater than 400 nm.

3.  The light-shielding member according to claim 1 or 2, wherein

    the film deposition surface has irregularities, and
    the film deposition surface has a surface roughness not greater than 1.0 $\mu$m.

4.  The light-shielding member according to any one of claims 1 to 3, wherein the base is colored in black.

5.  The light-shielding member according to any one of claims 1 to 4, wherein the light absorbing layer contains a metal or an unsaturated oxide of a metal.

6.  The light-shielding member according to claim 5, wherein a main component of the light absorbing layer is at least one of Nb, Ti, Ni, Ge, Al, Si, Cr, and an unsaturated oxide of any of these metals.

7.  The light-shielding member according to any one of claims 1 to 6, wherein the dielectric layer contains a metal compound.

8.  The light-shielding member according to claim 7, wherein a main component of the dielectric layer is at least one of $SiO_2$, $MgF_2$, $Nb_2O_5$, $TiO_2$, $Al_2O_3$, $ZrO_2$, $Ta_2O_5$, $Si_3N_4$, and $SiN_yO_z$.

9.  The light-shielding member according to any one of claims 1 to 8, wherein the main component of the outermost layer is at least one of $SiO_2$ and $MgF_2$.

10. A light-shielding member comprising:

a base; and

an optical multilayer film disposed on a film deposition surface which is one or more surfaces of the base, wherein the film deposition surface has irregularities,

an average optical density of the film deposition surface in a wavelength range of not less than 380 nm and not greater than 780 nm with respect to light whose incident angle is not less than 0° and not greater than 8°, is not less than 4.0,

an average regular reflectance of the film deposition surface in a wavelength range of not less than 380 nm and not greater than 780 nm with respect to light whose incident angle is not less than 0° and not greater than 8°, is not greater than 0.02%, and

a lightness L* of the film deposition surface in L*a*b* colorimetric system measurement (JISZ8729) is not greater than 4.5.

11. A light-shielding member comprising:

a transparent base, and

an optical multilayer film disposed on a film deposition surface which is one or more surfaces of the base, wherein the film deposition surface is a mirror-finished surface,

an average regular reflectance of the film deposition surface in a wavelength range of not less than 400 nm and not greater than 700 nm with respect to light whose incident angle is not less than 0° and not greater than 8°, is not greater than 0.450%,

an average regular reflectance of the film deposition surface in a wavelength range of not less than 380 nm and not greater than 780 nm with respect to light whose incident angle is not less than 0° and not greater than 8°, is not greater than 0.660%, and

an average optical density of the film deposition surface in a wavelength range of not less than 380 nm and not greater than 780 nm with respect to light whose incident angle is not less than 0° and not greater than 8°, is not less than 2.1.

FIG.1

FIG.2

## INTERNATIONAL SEARCH REPORT

| International application No. |
| --- |
| PCT/JP2021/012034 |

### A. CLASSIFICATION OF SUBJECT MATTER
G02B 5/00(2006.01)i; B32B 7/023(2019.01)i; G02B 1/115(2015.01)i; G02B 5/22(2006.01)i
FI: G02B5/00 B; B32B7/023; G02B1/115; G02B5/22

According to International Patent Classification (IPC) or to both national classification and IPC

### B. FIELDS SEARCHED

Minimum documentation searched (classification system followed by classification symbols)
G02B5/00; B32B7/023; G02B1/115; G02B5/22

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2018-185446 A (SEIKO EPSON CORP.) 22 November 2018 (2018-11-22) paragraphs [0048]-[0052], fig. 2 | 1-3, 5-8<br>4, 9 |
| X<br>Y | JP 2006-201697 A (CANON INC.) 03 August 2006 (2006-08-03) paragraphs [0020]-[0021], fig. 1-2 | 1-3, 5-9<br>4, 9 |
| Y | JP 2001-350003 A (NIKON CORP.) 21 December 2001 (2001-12-21) claims | 4 |
| Y | JP 2015-99345 A (FUJIFILM CORPORATION) 28 May 2015 (2015-05-28) claims, examples | 4 |
| A | JP 2012-163756 A (TANAKA ENGINEERING INC.) 30 August 2012 (2012-08-30) entire text all drawings | 1-9 |
| A | WO 2016/104590 A1 (ASAHI GLASS CO., LTD.) 30 June 2016 (2016-06-30) entire text all drawings | 1-9 |

☒ Further documents are listed in the continuation of Box C.      ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 June 2021 (03.06.2021) | 15 June 2021 (15.06.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2021/012034 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-148844 A (ASAHI GLASS CO., LTD.) 01 August 2013 (2013-08-01) entire text all drawings | 1-9 |

Form PCT/ISA/210 (continuation of second sheet) (January 2015)

**INTERNATIONAL SEARCH REPORT**

| International application No. |
|---|
| PCT/JP2021/012034 |

---

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III        Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.    Consequently, this international search report is restricted to the invention first mentioned in the claims; it is covered by claims Nos.: 1−9

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

---

Form PCT/ISA/210 (continuation of first sheet (2)) (January 2015)

INTERNATIONAL SEARCH REPORT
Information on patent family members

International application No.

PCT/JP2021/012034

| Patent Documents referred in the Report | Publication Date | Patent Family | Publication Date |
|---|---|---|---|
| JP 2018-185446 A | 22 Nov. 2018 | US 2018/0313979 A1 paragraphs [0064]–[0068], fig. 2 | |
| JP 2006-201697 A | 03 Aug. 2006 | (Family: none) | |
| JP 2001-350003 A | 21 Dec. 2001 | (Family: none) | |
| JP 2015-99345 A | 28 May 2015 | US 2015/0103226 A1 claims, examples CN 204389721 U | |
| JP 2012-163756 A | 30 Aug. 2012 | (Family: none) | |
| WO 2016/104590 A1 | 30 Jun. 2016 | US 2017/0248739 A1 CN 107113372 A | |
| JP 2013-148844 A | 01 Aug. 2013 | (Family: none) | |

Form PCT/ISA/210 (patent family annex) (January 2015)

**INTERNATIONAL SEARCH REPORT**

| International application No. |
|---|
| PCT/JP2021/012034 |

<Continuation of Box No. III>

Document 1: JP 2018-185446 A (SEIKO EPSON CORP.) 22 November 2018 (2018-11-22) paragraphs [0048]-[0052], fig. 2 & US 2018/0313979 A1 paragraphs [0064]-[0068], fig. 2

    Claims are classified in the three inventions below.

(Invention 1) Claims 1-9
    Document 1 discloses a light shielding member comprising a substrate 2 (corresponding to "base") and an antireflection film 1 (corresponding to "optical multilayer film"),
    wherein the antireflection film 1 includes a light shielding layer 6 (corresponding to "light absorption layer on a base side" and "light absorption layer with a maximum width on a base side"), a first transmission layer 7 (corresponding to "next outermost layer"), a semi-transmission layer 8 (corresponding to "light absorption layer on a surface layer"), and a second transmission layer 9 (corresponding to "outermost layer"), and
    a thickness of the light shielding layer 6 is 90 nm and a material thereof is titanium, a thickness of the first transmission layer 7 is 80 nm and a material thereof is aluminum oxide, a thickness of the semi-transmission layer 8 is 10.24 nm and a material thereof is titanium, and a thickness of the second transmission layer 9 is 70 nm and a material thereof is aluminum oxide ("specific ratio" is calculated to be 0.40).

    Therefore, claims 1-3 lack novelty in light of document 1, and thus do not have a special technical feature.
However, claim 4 dependent on claim 1 has the special technical feature in which the "base is colored black" on the premise of the specific feature of claim 1. Therefore claims 1-4 are classified as invention 1.
    Claims 5-9 are dependent on claim 1, inventively related to claim 1, and are thus classified as invention 1.

(Invention 2) Claim 10
    It cannot be said that claim 10, which is an independent claim, has the special technical feature identical or corresponding to claim 4 classified as invention 1.
    Claim 10 is not substantially identical or equivalent to any of the claims classified as invention 1.
    Therefore, claim 10 cannot be classified as invention 1, has the special technical feature, and is thus classified as invention 2.

(Invention 3) Claim 11
    It cannot be said that claim 11, which is an independent claim, has the special technical feature identical or corresponding to claim 4 classified as invention 1. It cannot be said that claim 11 has the special technical feature identical or corresponding to claim 10 classified as invention 2 (as an additional description, a common technical feature between claim 10 and claim 11 is only a light shielding member including a base and optical multilayer film, and it is obvious that this feature cannot be said to be a special technical feature in light of the disclosure of document 1.).
    Claim 11 is not substantially identical or equivalent to any of the claims classified as invention 1, or invention 2.
    Therefore, claim 11 cannot be classified as any of invention 1 and invention 2, has the special technical feature, and is thus classified as invention 3.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6541244 B

- JP 6036363 B